# EUROPÄISCHE PATENTSCHRIFT

(11) **EP 2 126 733 B1**
(45) Veröffentlichungstag und Bekanntmachung des Hinweises auf die Patenterteilung: **05.09.2012**
(21) Anmeldenummer: 08706987.8
(22) Anmeldetag: 10.01.2008
(51) Int. Cl.: G10L 13/08, H04N 7/24, G06F 17/22

(54) **CODIEREN EINES TEXT-DATENSSTROMS IN EINEM BASIS-UND ERWEITERUNGSMODUS FÜR EMPFÄNGER MIT UNTERSCHIEDLICHEN DECODERN**
CODING OF A TEXT DATA FLOW IN A BASE AND EXTENSION MODE FOR CAPTURING VARIOUS DECODES
DISPOSITIF ET PROCÉDÉ DE PRODUCTION D'UN FLUX DE DONNÉES ET DISPOSITIF ET PROCÉDÉ DE LECTURE D'UN FLUX DE DONNÉES

(30) Priorität: 16.02.2007 DE 102007007830
(43) Veröffentlichungstag der Anmeldung: 02.12.2009
(73) Patentinhaber: Fraunhofer-Gesellschaft zur Förderung der angewandten Forschung e.V., 80686 München (DE)
(72) Erfinder: ZINK, Alexander, 96135 Stegaurauch (DE); PROSCH, Markus, 91058 Erlangen (DE); KORTE, Olaf, 91338 Igensdorf (DE); KELLERMANN, Christian, 90429 Nürnberg (DE); LINZ, Bernd, 91054 Erlangen (DE)
(74) Vertreter: Zinkler, Franz
(86) Internationale Anmeldenummer: PCT/EP2008/000143
(87) Internationale Veröffentlichungsnummer: WO 2008/098645

(56) Entgegenhaltungen:
- WO-A-02/052857

## Beschreibung

Die vorliegende Erfindung bezieht sich auf die Datenübertragung und insbesondere auf eine einfachere Datenübertragung mit Text für einfache Empfänger und Text plus Daten für aufwändigere Empfänger, wobei der Datenstrom von beiden Empfängerarten ausgewertet werden kann.

Es existieren inzwischen eine Vielzahl von einzelnen Empfänger-Endgeräten, die alle in der Lage sind, übertragene Informationen mobil zu empfangen. Kennzeichnend für dieses große Spektrum ist, dass die Verarbeitungs- und Ausgabekapazitäten solcher unterschiedlicher Informationsempfänger stark unterschiedlich sind. Ein Notebook beispielsweise hat als mobiler Empfänger von übertragenen Informationen eine sehr hohe Verarbeitungs- und Ausgabekapazität, da ein Notebook erhebliche Prozessorressourcen und Speicherressourcen hat. Andererseits hat z.B. ein Mobiltelefon, das ebenfalls an einem Informationsdienst teilnimmt, wie beispielsweise einem Broadcast- oder Rundfunk-Datenkanal sehr begrenzte Verarbeitungsressourcen und Ausgaberessourcen. Noch beschränkter sind die Verarbeitungs- und Ausgaberessourcen in einem kleinen mobilen Rundfunkempfänger, der nicht einmal als Mobiltelefon gedacht ist, sondern lediglich als mobiler Rundfunkempfänger mit dem man Daten empfangen möchte, wie beispielsweise Bundesligaergebnisse, sonstige Sportergebnisse, Schlagzeilen einer Zeitung, Wetternachrichten, etc., wenn man einen entsprechenden Daten-Broadcast-Dienst nutzt.

Ein solcher textbasierter Informationsdienst für den digitalen Rundfunk, der für eine einfache Datensammlung und Wiederverwendung sowie für eine sehr effiziente Rundfunkübertragung geeignet ist, existiert unter der Bezeichnung "Journaline". Dieser Datendienst unterstützt einen sehr breiten Bereich an Empfängertypen, die von preisgünstigen Lösungen mit einem kleinen Textdisplay bis zu High-End-Empfängern mit grafischer Benutzerschnittstelle und optionalen Text-zu-Sprache-Playback gehen.

Der Benutzer kann unmittelbar und interaktiv alle Informationen, die von der Radiostation geliefert werden, verarbeiten. Insofern ist der Dienst vergleichbar mit Videotext für das Fernsehen. Die Basisinformationen werden in einer einfachen Textform geliefert, wobei jedoch gleichzeitig die Option für aufwändigere grafische Darstellungen einschließlich einer Erweiterung zu Multimediaelementen wie Bild- oder Videosequenzen und sonstigen Funktionserweiterungen möglich sein soll.

Andererseits ist es wichtig, dass ein Datenstrom, der z.B. von einem DAB-Sender ausgesendet wird, rückwärts-kompatibel ist, also sowohl von einfachen Empfängern, als auch von aufwändigeren Empfängern bzw. von Basis-Empfängern, welche einfache Empfänger sind, und Erweiterungs-Empfängern, welche aufwändigere Empfänger sind, gleichermaßen gelesen und verarbeitet werden kann.

Die WO 02/052857 A2 offenbart die Verwendung von zwei unterschiedlichen Verzweigungscodes, wobei einer der beiden häufiger verwendet wird und konsequenterweise eine Kompression bewirkt. Der Verzweigungscode und ein Positionscode werden kombiniert und die Bitlänge für den Verzweigungscode wird übertragen. Dies resultiert in einer Vereinfachung einer Suchfunktion derart, dass ein erster Teil alleine den Typ des referenzierten Elements spezifiziert und dass eine Verbesserung bezüglich der Erweiterbarkeit basierend auf einer Versionsnummer, die zu übertragen ist, erreicht wird, und auf streng vorgeschriebenen Erweiterungsstrategien, die einem Decodierer bekannt sind.

Die Aufgabe der vorliegenden Erfindung besteht darin, ein Konzept zum Erzeugen und Verarbeiten eines Datenstroms zu schaffen, der gleichermaßen von einfachen und von aufwändigen Empfängern verarbeitet werden kann, und das eine hohe Flexibilität der Datenübertragung und Verarbeitung erlaubt, und zwar zusätzlich zu den Textdaten, die von einfachen Empfängern und von aufwändigen Empfängern gleichermaßen interpretierbar sein sollen.

Diese Aufgabe wird durch eine Vorrichtung zum Erzeugen eines Datenstroms nach Patentenspruch 1, eine Vorrichtung zum Lesen eines Datenstroms nach Patentanspruch 4 oder 5, ein Verfahren zum Erzeugen eines Datenstroms nach Patentenspruch 11, eine Verfahren zum Lesen eines Datenstroms nach Patentanspruch 12 oder 13, oder ein Computer-Programm nach Patentanspruch 14 oder einen Datenstrom nach Patentanspruch 15 gelöst.

Ein Datenstrom umfasst neben Textdaten eine Escape-Start-Sequenz, die eine erste Anzahl von Dateneinheiten definiert, die von einem Basis-Decodierer zu überspringen sind, und die von einem Erweiterungs-Decodierer zu interpretieren sind, die erste Anzahl von Dateneinheiten, eine Escape-Fortsetzungs-Sequenz, die eine zweite Anzahl von Dateneinheiten definiert, die wieder von einem Basis-Decodierer zu überspringen sind, und von einem Erweiterungs-Decodierer zusammen mit der ersten Anzahl von Dateneinheiten zu interpretieren sind, sowie die zweite Anzahl von Dateneinheiten und schließlich gegebenenfalls Textdaten.

Damit wird sichergestellt, dass einerseits kurze StartSequenzen genommen werden können, da die Anzahl der Dateneinheiten, auf die sich eine Escape-Start-Sequenz bezieht, höchstens so groß oder kleiner als die maximale Anzahl von Dateneinheiten ist, die durch die Escape-Start-Sequenz signalisierbar ist. Für die normalerweise eher wenigeren Fälle, bei denen die Anzahl der Dateneinheiten, die lediglich für bessere Decodierer gedacht sind, größer als die Anzahl von Dateneinheiten ist, die durch die Escape-Start-Sequenz interpretierbar ist, wird ferner eine Escape-Fortsetzungs-Sequenz vorgesehen, die eine Anzahl von Dateneinheiten definiert, die zusammen mit der ersten Anzahl von Dateneinheiten von einem Erweiterungs-Decodierer zu interpretieren sind. Für kürzere Datenblöcke mit einer kleineren Anzahl von Dateneinheiten werden somit immer lediglich nur die Escape-Start-Sequenz benötigt, die ein kurzer Code ist, da sie nicht eine beliebig lange Länge codieren soll, sondern lediglich eine begrenzte Länge der Dateneinheiten. Flexibilität wird erlangt, dass andererseits beliebig lange Dateneinschübe möglich sind, die durch eine beliebig häufige Wiederholung von Escape-Fortsetzungs-Sequenzen und zweiten Dateneinheiten nach einer Escape-Fortsetzungs-Sequenz in den Datenstrom eingebracht werden können.

Anders ausgedrückt ist die in dem Text für einen Erweiterungs-Decodierer einzubringende Datenmenge durch den flexiblen Datenstrom nach oben unbegrenzt. Allerdings geht dies nicht zu Lasten der Länge der Escape-Start-Sequenz, da die Aufgabe der Signalisierung der Länge von sehr langen Dateneinschüben gewissermaßen auf mehrere Sequenzen verteilt wird, nämlich auf die Escape-Start-Sequenz und eine im Datenstrom auftretende spätere Escape-Fortsetzungs-Sequenz und ggf. weitere Escape-Fortsetzungs-Sequenzen, während für doch relativ häufig auftretende Dateneinschübe, die kurz sind, immer nur eine kurze Escape-Start-Sequenz benötigt wird. Der Erweiterungs-Decodierer weiß somit dann, wenn er eine Escape-Fortsetzungs-Sequenz in dem Datenstrom findet, dass die mit dieser Sequenz angezeigten Dateneinheiten zu den ersten Dateneinheiten dazu gehören. In den Dateneinheiten steht im Hinblick auf eine weitere Flexibilisierung bei der Verwendung des Datenstroms ein Datentypindikator, der den Typ der Daten und damit die mit diesen Daten durchzuführende Verarbeitung sowohl der ersten Dateneinheiten als auch der zweiten Dateneinheiten angibt. Der Datentypindikator steht z. B. vor den ersten Dateneinheiten, die durch die Escape-Start-Sequenz referenziert werden, und von den zweiten Dateneinheiten, die durch die Escape-Fortsetzungs-Sequenz referenziert werden.

Bevorzugte Ausführungsbeispiele der vorliegenden Erfindung werden nachfolgend Bezug nehmend auf die beiliegenden Zeitungen detailliert erläutert. Es zeigen:
- Fig. 1: ein Blockschaltbild einer Vorrichtung eines Datenstroms;
- Fig. 2a: ein Blockschaltbild eines Basis-Empfängers;
- Fig. 2b: ein Blockschaltbild eines Erweiterungs-Empfängers;
- Fig. 3a: eine Darstellung eines Datenstroms;
- Fig. 3b: eine vergrößerte Darstellung einer Escape-Start-Sequenz und einer Escape-Fortsetzungs-Sequenz gemäß einem Aspekt;
- Fig. 3c: eine Darstellung der Daten, die durch die Escape-Start-Sequenz und die Escape-Fortsetzungs-Sequenz von Fig. 3a bzw. Fig. 3b referenziert werden, zusammen mit einem Datentyp-Indikator, welcher von einem Erweiterungs-Decodierer interpretierbar ist;
- Fig. 4a: einen Beispiel-Datenstrom ohne Fortsetzungscode;
- Fig. 4b: ein Codierbeispiel mit einem Fortsetzungscode;
- Fig. 5: ein Flussdiagramm eines Verfahrens zum Erzeugen eines Datenstroms
- Fig. 6A: ein Flussdiagramm, das von einem Basis-Empfänger ausgeführt wird;
- Fig. 6B: ein Flussdiagramm, welches von einem Erweiterungs-Empfänger ausgeführt wird; und
- Fig. 7: verschiedene Datentypen, wie sie von einem Datentypindikator angezeigt werden können und wie sie verarbeitet werden können.

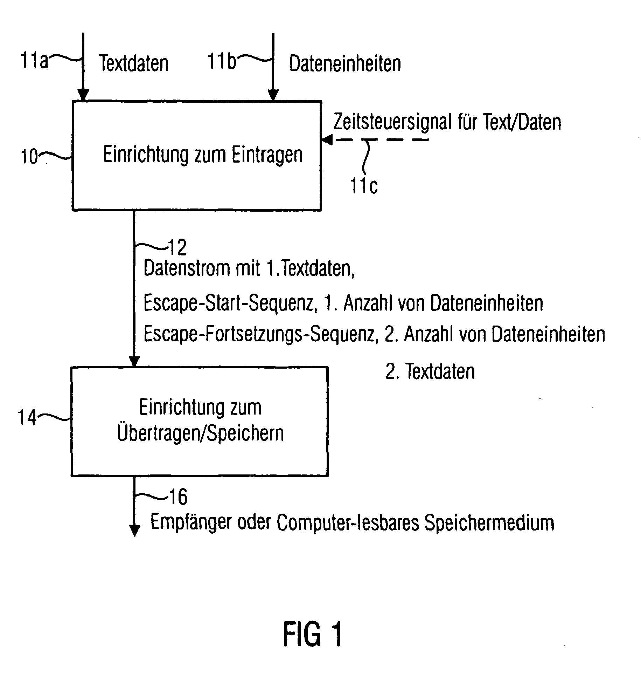

Fig. 1 zeigt eine Vorrichtung zum Erzeugen eines Datenstroms, die eine Einrichtung 10 zum Eintragen von Informationen in den Datenstrom aufweist, welcher an einem Ausgang 12 ausgegeben wird. Der Datenstrom wird in eine Einrichtung 14 zum Übertragen und/oder Speichern des Datenstroms eingespeist, um im Beispiel einer Rundfunkübertragung über eine Freiraum-Übertragungsstrecke 16 zu einem Empfänger bzw. Decodierer des Datenstroms übertragen zu werden. Alternativ ist der Ausgang 16 der Einrichtung 14 zum Übertragen oder Speichern mit einem Computer-lesbaren Speichermedium verbunden, wie beispielsweise einer Speicherkarte, die am Ausgang der Einrichtung angeschlossen ist oder die am anderen Ende einer Übertragungsstrecke, beispielsweise in einem Empfänger vorgesehen ist, wenn dieser Empfänger die Daten lediglich, speichert, jedoch noch nicht verarbeitet bzw. speichert und gleichzeitig verarbeitet. Ein computerlesbares Speichermedium kann somit eine nicht-flüchtige Speicherkarte in einem Empfänger oder Decodierer oder eine Festplatte eines Notebooks sein oder aber ein Arbeitsspeicher eines Decodierers, der so lange seine Daten hält wie er mit Strom bzw. Spannung versorgt wird.

Die Einrichtung 10 zum Eintragen enthält Textdaten 11a und Dateneinheiten 11b. Vorzugsweise wird in Bytes gerechnet. Eine Dateneinheit ist also 8 Bits bzw. 1 Byte lang. Diese Granularität wird bevorzugt, da in dieser Granularität sowohl Text als auch Daten gut handhabbar sind. In diesem Zusammenhang wird es bevorzugt zur Textcodierung das UTF8-Codierformat zu verwenden, bei dem typische ASCII-Zeichen jeweils mit einem Byte codiert werden, während z.B. deutsche Umlaute mit 2 Bytes codiert werden und z.B. chinesische Schriftzeichen mit 3, 4 oder mehr Bytes codiert werden. Ein Basisempfänger ist daher in der Lage, eine UTF8-Codierung zu decodieren, was beispielsweise durch Hinterlegung einer UTF8-Decodiertabelle geschehen kann. Je nach Decodierung erhält die Einrichtung zum Eintragen Textdaten und Dateneinheiten parallel. In diesem Falle erhält die Einrichtung zum Eintragen auch ein Zeitsteuersignal 11c, das festlegt, zu welchem Zeitpunkt Textdaten und zu welchem Zeitpunkt Dateneinheiten in den z.B. seriellen Datenstrom 12 eingespeist werden sollen. Alternativ kann die Einrichtung 10 zum Eintragen bereits Textdaten und Dateneinheiten über einen einzigen Eingang erhalten, welcher Textdaten und Dateneinheiten bereits in der richtigen gewünschten zeitlichen oder bitstrommäßigen Reihenfolge liefert.

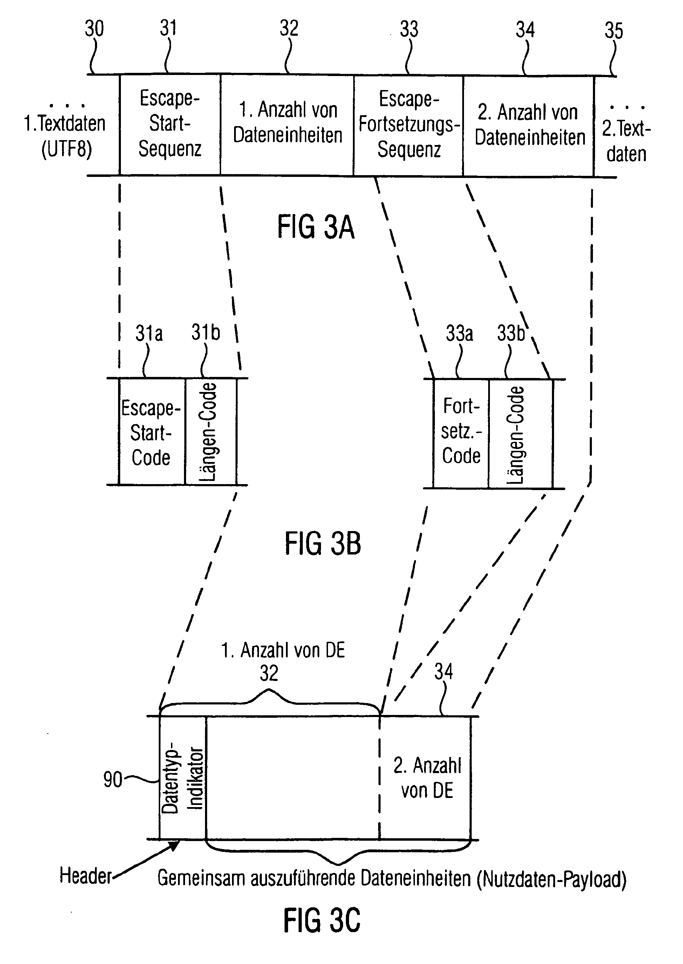

Die Einrichtung zum Eintragen ist ausgebildet, um Textdaten in den Datenstrom einzutragen. Wenn Dateneinheiten eingetragen werden sollen, die von einem einfachen Decodierer übersprungen werden sollen, während die Dateneinheiten von einem aufwändigeren Decodierer gelesen bzw. verarbeitet werden sollen, wird in den Datenstrom eine Escape-Start-Sequenz eingetragen, wie sie beispielsweise in Fig. 3a angedeutet ist. Die Escape-Start-Sequenz 31 definiert eine erste Anzahl von Dateneinheiten, die von einem Basis-Decodierer zu Überspringen sind und von einem Erweiterungs-Decodierer zu interpretieren sind. Diese erste Anzahl von Dateneinheiten wird dann ebenfalls in den Datenstrom eingetragen, wie es bei 32 in Fig. 3a zu sehen ist. Enthält der einzutragende Datenblock mehr Dateneinheiten als sie von der Escape-Start-Sequenz zu definieren sind, so wird die Einrichtung 10 eine Escape-Fortsetzungs-Sequenz 33 einfügen, die eine zweite Anzahl von Dateneinheiten definiert, die von einem Basis-Decodierer zu überspringen sind, die allerdings von einem Erweiterungs-Decodierer zusammen mit der ersten Anzahl von Dateneinheiten zu interpretieren sind. Diese zweite Anzahl von Dateneinheiten wird dann ebenfalls in den Datenstrom eingetragen, wie es in Fig. 3a bei 34 zu sehen ist.

Je nach Implementierung, also wenn der Datenblock ein großer Datenblock ist, der noch mehr Daten hat als sie durch die Escape-Fortsetzungs-Sequenz definiert werden können, wird eine weitere Escape-Fortsetzungs-Sequenz in den Datenstrom geschrieben, usw. bis alle an dieser Stelle in die Textdaten einzutragenden Dateneinheiten, die zusammen von einem Erweiterungs-Decodierer zu interpretieren sind, eingetragen worden sind.

Dann wird die Einrichtung 10 zum Eintragen von Fig. 1 typischerweise wieder Textdaten eintragen, die in Fig. 3a beispielsweise als zweite Textdaten 35 bezeichnet sind, so dass sich ein Datenstrom ergibt, bei dem erste Textdaten 30 und zweite Textdaten 35 vorhanden sind, die gewissermaßen Daten einklammern, die von dem Basis-Decodierer zu überspringen sind, wobei der Basis-Decodierer zumindest in der Lage ist, die Escape-Start-Sequenz und insbesondere die Anzahl der Dateneinheiten sowie die Escape-Fortsetzungs-Sequenz und zumindest die dort enthaltene Anzahl von Dateneinheiten zu lesen, um die korrekte Anzahl von Dateneinheiten im Datenstrom überspringen zu können.

Fig. 3b zeigt ein Beispiel für eine Escape-Start-Sequenz 31, welche einen Escape-Start-Code 31a sowie einen nachgeschalteten Längen-Code 31b aufweist. Analog hierzu ist die Escape-Fortsetzungs-Sequenz 33 aufgebaut, die einen getrennten Fortsetzungs-Code 33a und einen nachgeschalteten Längencode 33b aufweist. Beispielsweise sind alle Codes 31a, 31b, 33a, 33b jeweils 1 Byte bzw. eine Dateneinheit lang, woraus sich ergibt, dass durch den Längencode 256 Dateneinheiten codierbar sind. Dies bedeutet, dass dann, wenn ein Datenblock mehr als 256 Dateneinheiten lang ist nach den ersten 256 Dateneinheiten der Fortsetzungscode 33a geschrieben bzw. in den Datenstrom eingetragen werden soll, um dann mit dem anschließenden Längencode 33b die noch verbleibenden Dateneinheiten des Datenblocks zu codieren.

Wäre eine Dateneinheit entsprechend länger, so könnte durch einen Längencode, der eine Dateneinheit lang ist, eine größere Anzahl von Dateneinheiten codiert werden, was dazu führen würde, dass bei einem solchen Datenstrom insgesamt die Anzahl der Fortsetzungscodes geringer wird. Wird dagegen der Längencode zu weniger als 8 Bits gewählt, so ist die maximale Anzahl der Daten, die durch den Längencode codiert werden kann, entsprechend geringer, so dass sich bei sonst gleichen Verhältnissen die Anzahl der Fortsetzungscodes im Datenstrom entsprechen erhöhen wird. Typischerweise existiert ein Optimum dahin gehend, dass für eine bestimmte mittlere Länge der Datenblöcke eine bestimmte Länge der Dateneinheiten existiert. Würde man den Längencode zu lange machen, so wäre dieses Prozedere ineffizient, da dann selbst für einen nur sehr kurzen Dateneinschub der gesamte lange Längencode in den Datenstrom geschrieben werden soll. Würde man den Längencode dagegen zu kurz machen, so soll für die übergroße Anzahl von Datenblöcken ein Fortsetzungscode geschrieben werden, der insbesondere bei der in Fig. 3b gezeigten Implementierung dann nicht benötigt werden würde, wenn man gleich einen längeren Längencode genommen hätte.

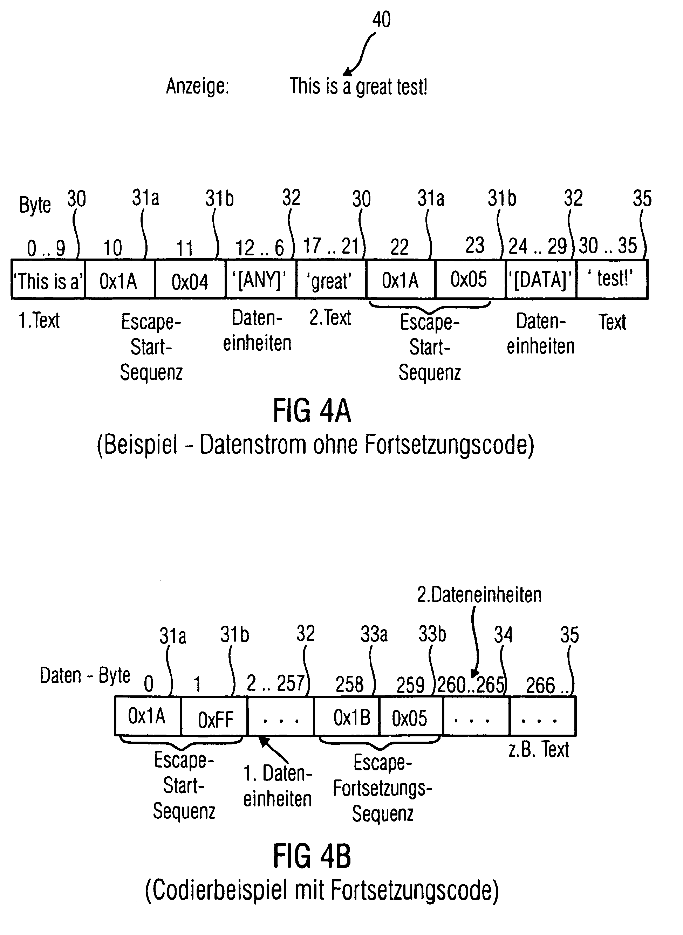

Fig. 4a zeigt einen Beispiel-Datenstrom, der zu einer Anzeige "This is a great test!" führt, wie es bei 40 in Fig. 4a angezeigt ist. Der dazugehörige Datenstrom hat zunächst erste Textdaten 30 mit dem Text "This is a ". Hierzu werden 10 Bytes benötigt, da für jeden Buchstaben und für die Leerstellen in der UTF8-Codierung jeweils 1 Byte gebraucht wird. Die ersten Textdaten sind somit 10 Bytes lang.

Dann sollen Daten eingefügt werden. Um dies zu signalisieren, findet sich im Byteindex (nullbasiert) 10 der Escape-Start-Code 31a, der bei dem in Fig. 4a gezeigten Beispiel 1A ist, wobei das Präfix "0x" eine hexadezimale Darstellung andeutet. Selbstverständlich könnte für den Escape-Start-Code jeder andere Code eingesetzt werden, der sich von einem Textcode unterscheidet. Anders ausgedrückt, soll sich der Escape-Start-Code 31a, der bei dem Beispiel in Fig. 4a 1 Byte lang ist, von dem Code unterscheiden, der bei einer UTF8-Codierung am Bildschirm anzeigbare Zeichen (Zahlen, Buchstaben, ...) definiert. Die Escape-Codes sind also z. B. UTF8-Steuerzeichen oder sonst festgelegte Zeichen, die zu den Textcodes für am Bildschirm anzeigbare Zeichen unterschiedlich sind.

An den Escape-Start-Code 31a anschließend findet sich ein Längen-Code 31b, der anzeigt, wie lang das Datenfeld ist, das an den Längecode 31b angeschlossen ist. Das Längenfeld enthält den Code 4, so dass konsequenterweise die ersten Dateneinheiten 32 in Fig. 4a 5 Bytes umfassen. Hintergrund hierfür ist, dass das Längenfeld den Term "-1" implizit umfasst, weil ein Längenangabe von Null keinen sinn machen würde.

Dann folgt wieder ein Textfeld, nämlich das Wort "great" mit 5 Bytes, woraufhin wieder, bei Byteindex 22 ein Escape-Start-Code 31a geschrieben ist, dem ein Längen-Code 31b folgt, der einen Wert von 5 hat, da dann, an den LängenCode anschließenden Byteindizes 24 bis 29 6 Byte Daten geschrieben sind. Ausgangsseitig findet sich wieder ein Textblock 35, welcher 6 Bytes lang ist, da für jeden Buchstaben von "Test" 1 Byte benötigt wird, und da für das Ausrufezeichen ebenfalls 1 Byte benötigt wird.

Damit ergibt sich ein 36 Byte langer Datenstrom, der an zwei unterschiedlichen Stellen insgesamt 11 Byte eingefügte Zusatzdaten enthält.

Ein Basis-Decodierer wird die Daten einlesen und darstellen und wird dann, wenn er auf den Escape-Start-Code 31a stößt, diesen dahin gehend interpretieren, dass er einen zu dem Escape-Start-Code gehörigen Längen-Code sucht. Eine Interpretation dieses Längen-Codes führt den Basis-Decodierer dann dazu, dass er die Dateneinheiten, die durch den Escape-Start-Code und den Längen-Code referenziert werden, einfach überspringt, also ignoriert und nicht weiter beachtet. Der Basis-Decodierer liest dann die Textdaten in den Byteindizes 17 bis 21 ein, um dann, wieder einen Code 31a als Escape-Start-Code zu erkennen und eine zugehörige Längenangabe im Code 31b zu suchen, um wieder die Anzahl von Bytes zu überspringen, die im Code 31b signalisiert sind.

Damit wird auf einfache Art und Weise sichergestellt, dass ein Basis-Decodierer selbst einen Datenstrom lesen kann, der für neuere bzw. aufwändigere Erweiterungs-Decodierer geschrieben ist. Die Tatsache, dass der Basis-Decodierer zwar mit den Daten nichts machen kann, allerdings die Escape-Start-Sequenz mit Code und Längenangabe korrekt interpretieren kann, stellt die Rückwärtskompatibilität sicher. Ein Erweiterungs-Decodierer ist allerdings in der Lage, nicht nur die Startsequenz, also die Codes 31a und 31b, zu interpretieren, sondern auch die Daten nicht nur einfach zu überspringen, sondern zu verarbeiten, um damit neben einer einfachen Textdarstellung zusätzliche Funktionen ausführen zu können, die über den Datenstrom und die zu einer Escape-Sequenz zugehörigen Daten gesteuert werden.

Fig. 4b zeigt ein Codierbeispiel mit Fortsetzungs-Code, wobei bei dem in Fig. 4b gezeigten Beispiel davon ausgegangen wird, dass ein Datenblock länger als 256 Byte ist. Muss ein so großer Datenblock eingefügt werden, so wird zunächst, beim Datenbyteindex 0 eine Escape-Start-Sequenz eingefügt, die wiederum aus einem Escape-Start-Code 31a und einem nachgeschalteten Längen-Code 31b besteht. Der Längenwert im Längen-Code 31b ist nun jedoch nicht, wie in Byteindex 11 oder Byteindex 23 irgendeine Zahl, sondern das Maximum, nämlich "FF". Dann im Anschluß an den Länge-Code 31b werden in den Byteindizes 2 bis 257 die 256 ersten Dateneinheiten 32 in den Datenstrom geschrieben. Da noch mehrere weitere Dateneinheiten vorhanden sind, nämlich insgesamt 262 Bytes, wird der Datenstromerzeuger feststellen, dass er noch nicht alle Dateneinheiten in den Datenstrom geschrieben hat. Er schreibt daher einen Fortsetzungs-Code 33a in den Datenstrom, der sich von dem Escape-Start-Code 31a unterscheiden wird, damit der Decodierer weiß, dass die Dateneinheiten, die zum Fortsetzungs-Code gehören, die beispielsweise dem Fortsetzungs-Code unmittelbar folgen, noch zu den Dateneinheiten gehören, welche vor dem FortsetzungsCode verarbeitet bzw. eingelesen worden sind. Bei dem in Fig. 4b gezeigten Beispiel müssen noch sechs Dateneinheiten untergebracht werden, so dass der an den Fortsetzungs-Code folgende Längen-Code 33b eine Länge von 6 (Code 0x05) signalisiert. Dann, im Anschluss an diesen Längen-Code wird mit dem Schreiben der zweiten Dateneinheiten 34 der Einschub in den Datenstrom beendet, wobei dann, ab dem Byteindex 266, das in Fig. 4b gezeigt ist, z. B. ein normaler Text 35 kommen kann.

Es sei darauf hingewiesen, dass je nach Implementierung der Escape-Fortsetzungs-Code 33a nicht unbedingt zum Escape-Start-Code 31a unterschiedlich sein soll. Für den Basis-Decodierer spielt dies nämlich keine Rolle. Er soll lediglich sowohl den Escape-Start-Code 31a als auch den Escape-Fortsetzungs-Code 33a interpretieren und im Anschluss an diese Interpretation den nachgeschalteten Längen-Code lesen, um zu wissen, wie viel Daten zu überspringen sind. Ein Erweiterungs-Decodierer wäre in einem solchen Fall so implementiert, dass er dann, wenn zum ersten Mal ein Escape-Start-Code auftritt, dem ein Längen-Code mit maximaler Länge, also z. B. FF folgt, automatisch davon ausgeht, dass die dann wieder folgenden Dateneinheiten noch zu den Dateneinheiten 32 gehören und somit gemeinsam verarbeitet werden müssen. Die Bedeutung des Escape-Start-Codes würde somit dadurch "umgeschaltet" werden, dass der an den Escape-Start-Code 31a anschließende Längen-Code 31b eine maximale Länge anzeigt. Wenn der Escape-Start-Code 31a und der Fortsetzungs-Code 33a den selben Wert haben, so würde der Decodierer dann, wenn der Längen-Code 31b nach dem ersten Escape-Start-Code 31a nicht den maximalen Wert, also FF hat, den dann an die Dateneinheiten anschließenden FortsetzungsCode nicht als Fortsetzungs-Code, sondern als neuen Start-Code interpretieren, so dass die Daten, die auf den zweiten Start-Code folgen, nicht als Fortsetzung der Daten, die auf den ersten Start-Code folgen, verstanden werden, sondern als neue Daten eines neuen Datenblocks, der wiederum anders verarbeitetet werden kann. Die Interpretation, ob Daten Fortsetzungsdaten sind oder keine Fortsetzungsdaten sind, ist dann von besonderer Bedeutung, wenn in jedem Datenblock, der aus mehreren Dateneinheiten besteht, an einer bestimmten Stelle, wie beispielsweise am Anfang, ein Datentyp-Indikator steht, welcher dann, wenn die Daten keine Fortsetzungsdaten sind, gelesen wird, bzw. der dann, wenn die Daten Fortsetzungsdaten sind, von einem Decodierer nicht erwartet wird, und auch nicht ausgelesen wird, wie es noch Bezug nehmend auf Fig. 3c erläutert werden wird.

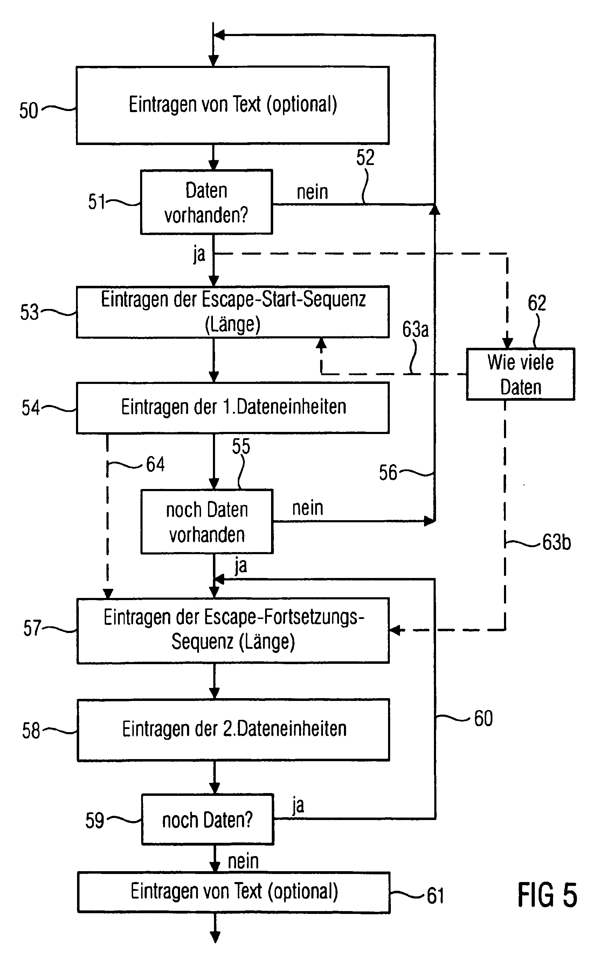

Nachfolgend wird Bezug nehmend auf Fig. 5 eine beispielhafte Sequenz von Schritten zum Erzeugen eines Datenstroms dargestellt, wie sie von einem Datenstromgenerator durchgeführt werden kann, der, wie in Fig. 1 gezeigt, aufgebaut ist.

Das Flussdiagramm in Fig. 5 startet mit einem Schritt des Eintragens von Text 50. In einem Schritt 51 wird überprüft, ob nach dem Eintragen von Text Daten vorhanden sind, die eingetragen werden müssen. Wird diese Frage mit nein beantwortet, so wird das nächste Textobjekt in den Datenstrom eingetragen, wie es durch die Schleife 52 dargestellt ist. Wird die Frage dagegen mit ja beantwortet, so wird von der Einrichtung 10 zum Eintragen eine Escape-Start-Sequenz eingetragen, wie es im Schritt 53 dargestellt ist. Die Escape-Start-Sequenz enthält eine Information über die Länge der Daten, also die Anzahl der Dateneinheiten. Nach dem Eintragen der Escape-Start-Sequenz in den Datenstrom werden die ersten Dateneinheiten eingetragen, wie es bei 54 gezeigt ist. In einem Schritt 55 wird überprüft, ob alle Daten in den Datenstrom eingetragen sind, die zu einem Datenblock gehören. Wird diese Frage mit nein beantwortet, sind also keine Daten mehr vorhanden, so wird wieder ein Textobjekt oder ein Escape-Code eingetragen, wie es durch eine Schleife 56 dargestellt ist.

An dieser Stelle sei darauf hingewiesen, dass die Escape-Startsequenzen vor einem Text, nach einem Text oder zwischen einem Text kommen können. Alternativ kann eine Escape-Start-Sequenz allerdings auch vor oder nach einer anderen Escape-Sequenz sein, wobei eine andere Escape-Sequenz andere Dinge als spezielle Daten anzeigen kann.

Wird dagegen bestimmt, dass noch Daten vorhanden sind, so wird eine Escape-Fortsetzungs-Sequenz eingetragen, wie es im Schritt 57 gezeigt ist. In dieser Escape-Fortsetzungs-Sequenz wird auch die Länge der Dateneinheiten, die dann in einem Schritt 58 eingetragen werden, festgelegt. In einem Schritt 59 wird dann überprüft, ob noch weitere Daten vorhanden sind. Ist dies der Fall, also werden noch weitere Daten des Datenblocks eingetragen, so wird eine weitere Escape-Fortsetzungs-Sequenz geschrieben, wie es bei 60 gezeigt ist. Sind dagegen nunmehr alle Daten eingetragen, so wird wiederum Text eingetragen, im Prinzip immer auf die selbe Art und Weise, wie es bei Schritt 50 gezeigt ist. Der Übersichtlichkeit halber wird dieses Eintragen von Text nach einem Datenblock mit einem Schritt 61 in Fig. 5 bezeichnet.

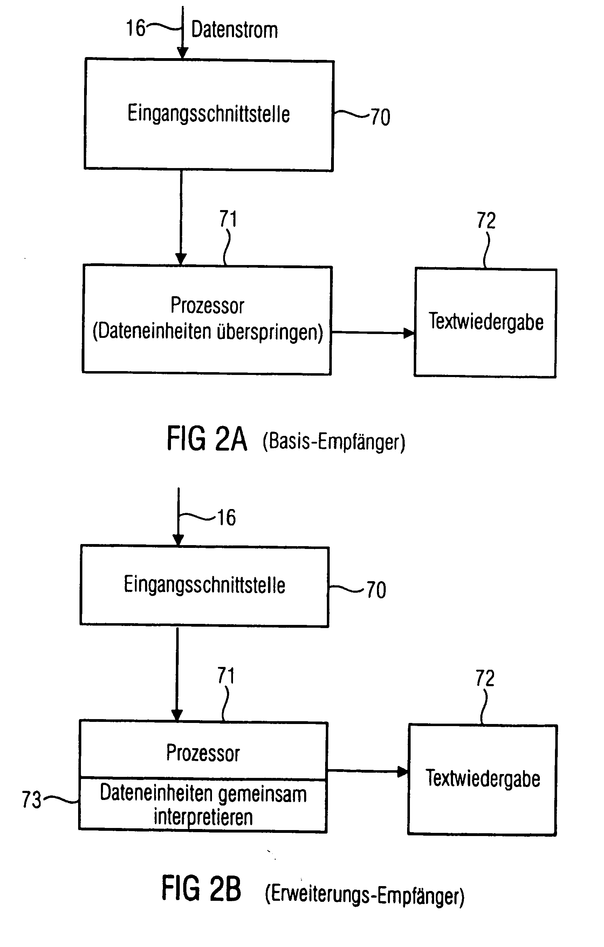

Es sei darauf hingewiesen, dass die Überprüfung im Schritt 55, ob noch Daten vorhanden sind, oder im Schritt 59, ob noch Daten vorhanden sind, nicht unbedingt durchgeführt werden soll, wenn parallel oder in einem Nebenprozess die Länge der einzutragenden Daten bestimmt wird, wie es in Fig. 5 beim Block 62 gezeigt ist. Im Block 62 wird untersucht, wie lange ein einzufügender Datenblock ist. Aufgrund der Anzahl von maximal zu codierenden Dateneinheiten in der Escape-Start-Sequenz weiß der Block 52 unmittelbar, wie viele Fortsetzungs-Sequenzen benötigt werden. In dem in Fig. 4b gezeigten Ausführungsbeispiel stellt der Block 62 fest, dass in die Escape-Start-Sequenz die maximale Länge einzutragen ist, und dass dann eine Fortsetzungs-Sequenz eingetragen wird, deren Länge ebenfalls bestimmt wird, wie es durch die Steuerpfeile 63a und 63b in Fig. 5 angedeutet ist. In diesem Fall soll daher die Prüfung im Block 55 oder im Block 59 nicht durchgeführt werden, wie es durch einen gestrichelten Verbindungspfeil 64 angedeutet ist. Diese Alternative stellt daher bereits eine Lösung dar, bei der die Escape-Start-Sequenz bereits vor dem Eintragen der Dateneinheiten fertig geschrieben ist, während in der zweiten Alternative die Länge in die Escape-Start-Sequenz erst eingetragen wird, nachdem die ersten Dateneinheiten bzw. die zweiten Dateneinheiten eingetragen worden sind. Nachfolgend wird Bezug nehmend auf Fig. 2a und Fig. 2b auf Empfänger zum Empfangen bzw. Decodieren des Datenstroms eingegangen, wobei dieser Datenstrom prinzipiell so wie in Fig. 3a gezeigt aufgebaut sein kann, dahin gehend, dass er Textdaten enthält, eine Escape-Start-Sequenz enthält, eine Anzahl von Dateneinheiten enthält, dann eine Escape-Fortsetzungs-Sequenz aufweist und anschließend an die Escape-Fortsetzungs-Sequenz wieder eine Anzahl von Dateneinheiten aufweist, der dann Textdaten folgen können, oder der eine weitere Escape-Fortsetzungs-Sequenz folgen kann.

Der Basis-Empfänger zum Lesen des Datenstroms umfasst eine Eingangsschnittstelle 70, um den Datenstrom 16 zu erhalten. Der Datenstrom wird dann zu einem Prozessor 71 übermittelt, der mit einer Textanzeige 72 gekoppelt ist, um den Text aus den Datenstrom zu lesen und anzuzeigen, wobei der Prozessor dann, wenn er auf eine Escape-Start-Sequenz stößt, die Länge bzw. Anzahl der Dateneinheiten ermittelt, um diese Anzahl von Dateneinheiten zu überspringen, und wobei der Prozessor ferner dann, wenn er auf eine Escape-Fortsetzungs-Sequenz stößt, ebenfalls die Anzahl der zu der Fortsetzungs-Sequenz gehörigen Dateneinheiten überspringt, wie es im Block 71 von Fig. 2a angezeigt ist.

Ein Erweiterungs-Empfänger, wie er in Fig. 2b gezeigt ist, umfasst zusätzlich zu den Elementen von dem Basis-Empfänger aus Fig. 2a noch einen Modul bzw. eine Funktionalität des Prozessors 71, das die Dateneinheiten nicht einfach überspringen werden, sondern gemeinsam ausgeführt werden.

Zusätzlich zur Textanzeige 72, die beim Erweiterungs-Empfänger genauso funktionieren kann oder wird wie beim Basis-Empfänger, wird beim Erweiterungs-Empfänger, also eine Interpretation der Dateneinheiten nach der Escape-Start-Sequenz und nach der Escape-Fortsetzungs-Sequenz vorgenommen.

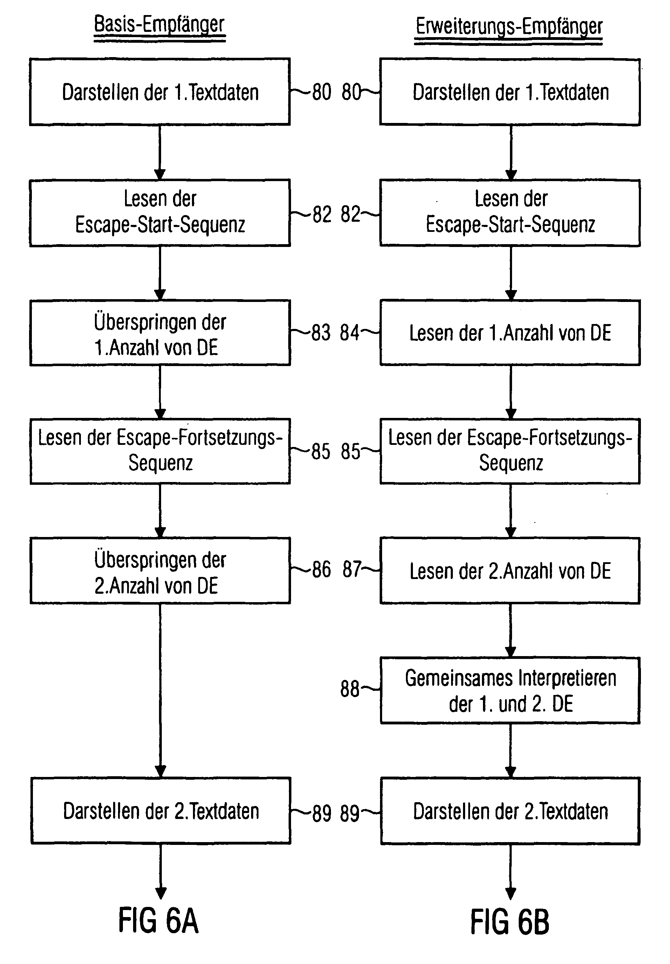

Nachfolgend wird Bezug nehmend auf Fig. 6A und Fig. 6B eine Gegenüberstellung der Funktionalitäten eines Basis-Empfängers ohne Datenverarbeitungsmöglichkeit und eines Erweiterungs-Empfängers mit Datenverarbeitungsmöglichkeit gegeben.

Wenn sowohl Basis-Empfänger als auch Erweiterungs-Empfänger Textdaten lesen, wird der Prozessor 71 von Fig. 2a oder Fig. 2b die Textdaten verarbeiten, decodieren und dann der Textanzeige 72 liefern und darstellen, wie es bei dem Schritt 80 von Fig. 6A und Fig. 6B gezeigt ist. Stoßen die Empfänger auf eine Escape-Start-Sequenz, so wird diese Escape-Start-Sequenz gelesen, wie es in einem Schritt 82 dargestellt ist. Insbesondere wird der Basis-Empfänger im Schritt 82 sehen, wie viele Dateneinheiten durch die Escape-Start-Sequenz, also beispielsweise durch den Längen-Code 31b von Fig. 3b angezeigt werden. In einem Schritt 83 wird der Basis-Empfänger dann die Anzahl von Dateneinheiten, die er im Schritt 82 herausgefunden hat, überspringen. Dagegen wird der Erweiterungs-Empfänger in einem Schritt 84 die Dateneinheiten nach der Escape-Start-Sequenz nicht überspringen, sondern lesen. Hierzu benötigt der Erweiterungs-Empfänger vorzugsweise ebenfalls die Längen-Information. Wenn die Daten jedoch unterschiedlich zu Text codiert sind, wäre die Längen-Information nicht unbedingt nötig.

In einem Schritt 85 lesen sowohl der Basis-Empfänger als auch der Erweiterungs-Empfänger die Escape-Fortsetzungs-Sequenz, die auf die ersten Dateneinheiten 32 von Fig. 3a folgt. Der Basis-Empfänger ist hierbei hauptsächlich an dem Längen-Code interessiert, um zu wissen, wie viel Daten zu überspringen sind, was der Basis-Empfänger dann in einem Schritt 86 auch tut. Dagegen wird der Erweiterungs-Empfänger in einem Schritt 87 die zweite Anzahl von Dateneinheiten nicht überspringen, sondern einlesen, wie es bei 87 dargestellt ist. Dann, in einem Schritt 88, für den es keinen parallelen Basis-Empfänger gibt, wird der Erweiterungs-Empfänger die Funktionalität bzw. das Modul 73 von Fig. 2b aktivieren und eine gemeinsame Ausführung der ersten und zweiten Dateneinheiten erreichen. Sind dann alle Dateneinheiten verarbeitet, so wird sowohl der Basis-Empfänger als auch der Erweiterungs-Empfänger in einem Schritt 89 die zweiten Textdaten darstellen, also die Daten 35, die bei dem in Fig. 3a gezeigten Datenstrom folgen. Ist dagegen der zweite Längen-Code 33b ebenfalls mit der Maximallänge versehen, also bei dem Beispiel mit "FF", so kann der Erweiterungs-Empfänger einen weiteren Escape-Fortsetzungs-Code einlesen, den daran anschließenden Längen-Code interpretieren und diese dann referenzierten Dateneinheiten ebenfalls wieder zu den ersten und zweiten Dateneinheiten hinzuzufügen, um wieder eine gemeinsame Ausführung zu ermöglichen.

Nachfolgend wird Bezug nehmend auf Fig. 3c näher darauf eingegangen, was im Schritt 88 vom Erweiterungs-Empfänger durchgeführt wird, bzw. wie die Daten interpretiert werden, die nach dem Escape-Start-Code und dem Fortsetzungs-Code extrahiert worden sind.

Die erste Anzahl von Dateneinheiten umfasst bei einem Beispiel einen Datentyp-Indikator 90, der beispielsweise 1 Byte lang ist. Dieser Datentyp-Indikator 90 findet sich nur in einem bestimmten, z. B. dem ersten Byte der ersten Anzahl von Dateneinheiten, auf die durch eine Escape-Start-Sequenz 31 Bezug genommen wird. Dagegen ist kein solcher Datentyp-Indikator in der zweiten Anzahl von Dateneinheiten vorhanden, sondern die zweite Anzahl von Dateneinheiten 34 trägt voll zu den gemeinsam auszuführenden Dateneinheiten bzw. der so genannten "Nutzdaten-Payload" bei. Ein Erweiterungs-Decodierer wird dann, wenn ein Datentyp-Indikator 90 verwendet wird, die Daten, die nach dem Fortsetzungs-Code enthalten sind, als zum selben Typ zugehörig interpretieren wie die Daten, die in der ersten Anzahl von Dateneinheiten enthalten sind. Damit wird ermöglicht, dass für die zweite Anzahl von Dateneinheiten, die nach dem Fortsetzungs-Code im Datenstrom auftreten, keinerlei Signalisierungen benötigt werden, die Informationen darüber enthalten, ob dies Fortsetzungs-Daten sind, oder welchen Datentyp die zweite Anzahl von Dateneinheiten hat. Stattdessen wird der Datentyp-Indikator in der ersten Anzahl von Dateneinheiten einfach für die zweite Anzahl von Dateneinheiten ebenfalls angewendet bzw. übernommen bzw. werden die Daten in der zweiten Anzahl von Dateneinheiten einfach an die erste Anzahl von Dateneinheiten angehängt, als ob es nie eine Trennung gegeben hätte, um dann gemeinsam ausgeführt bzw. verarbeitet zu werden.

Vorteilhaft am erfindungsgemäßen skalierbaren Datenstrom ist, dass er auf allgemeinen Standards aufbaut. So können Objekte im XML-Format importiert und weiterverarbeitet werden.

Der Datenstrom ist besonders geeignet für digitale Rundfunksysteme, und zwar als zusätzlicher Datenkanal, der den Zuhörern einen Zusatzwert schafft, da sie nunmehr einen unmittelbaren Zugriff auf Textinformationen haben, überall wo sie sich befinden, wobei Empfänger für den digitalen Rundfunk entweder einfache Empfänger sind und dann wenigstens Textinformationen darstellen oder besonders aufwändige und damit aber natürlich auch teurere Empfänger sind, die sämtliche Datenverarbeitungen der ersten Anzahl von Dateneinheiten und der zweiten Anzahl von Dateneinheiten durchführen können. Es können also sowohl preisgünstige und damit als Massenprodukt verfügbare Empfänger mit einem Textdisplay bereits einen Zusatzwert für den Zuhörer erzeugen. Geeignet ist jedoch der Datenstrom auch für High-End-Empfänger mit grafischer Benutzerschnittstelle und optionaler Sprachwiedergabe. Dies alles wird erreicht durch einfache Implementierungen selbst in preisgünstigen Empfängern und durch eine besonders einfache Benutzung, bei der sich ein Benutzer selbst nicht darum kümmern muss, welche Daten aktuell gültig sind. Stattdessen findet dies, also das Verwerfen der Daten oder das Ausführen der Daten je nachdem, welchen Empfänger ein Benutzer hat, voll automatisch statt, ohne dass der Benutzer sich hierum kümmern müsste.

Ferner sind Textdaten objektorientiert bei bestimmten Beispielen dargestellt, wobei diese Objekte alle selber für sich stehen und abgeschlossene Einheiten sind. Damit müssen keine globalen Datenstrukturen im Empfänger assembliert oder gehalten werden. Objekte werden in der Form eines Datenkarussells gesendet, und es wird ein Daten-Caching im Empfänger vorteilhafter weise eingesetzt. Textdaten, die beispielsweise Menü-Konstruktionen, Nachrichtenartikel oder Ticker-Nachrichten sein können, werden als sog. NML-Objekte übertragen, wobei NML für News Service Mark Language steht und Ähnlichkeiten zu XML-basierten binär codierten Inhaltsdarstellungen hat.

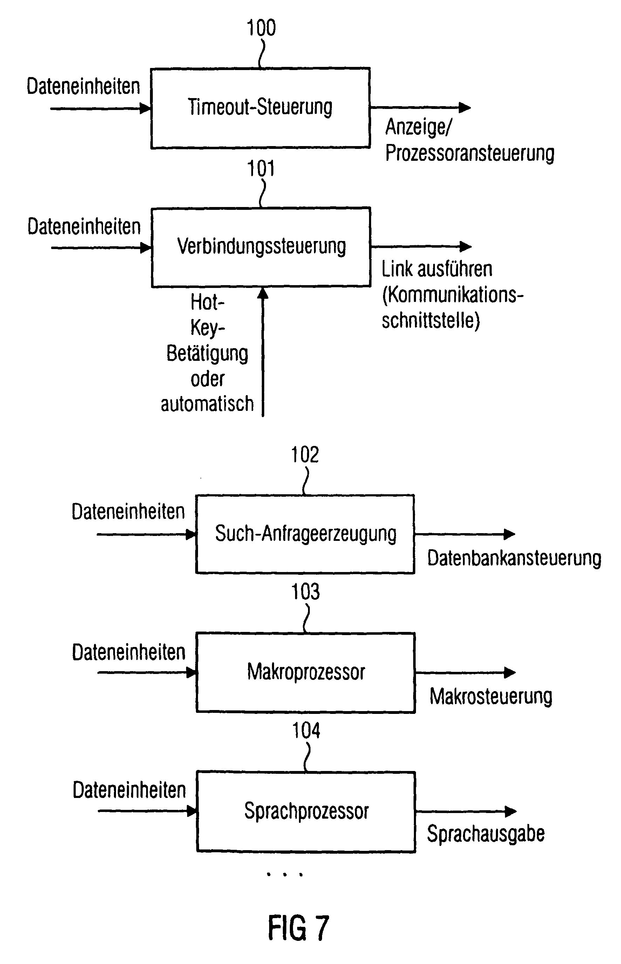

Als Start-Escape-Code 31a wird vorzugsweise der hexadezimale Code 1A verwendet und als Fortsetzungscode wird beispielsweise der hexadezimale Code 1B verwendet. Der Datentypindikator 90 von Fig. 3c kann diverse Datentypen anzeigen, wie es nachfolgend dargestellt wird. Die nachfolgenden Datentypindikator-Werte sind lediglich beispielhaft. Ein Indikator von "00" zeigt Padding an. Die darin enthaltenen Daten tragen Padding-Bytes, wobei dieser Inhalt sowohl vom Erweiterungs-Decodierer als auch vom Basis-Decodierer ignoriert wird. Ein alternativer Datensatztyp hat einen Indikator "01" und stellt einen absoluten Timeout dar. Es wird die absolute Präsentations-Timeout-Dauer eines NML-Objekts definiert. Wenn dieser Timeout geschehen ist, wird das NML-Objekt nicht länger angezeigt. Diese Escape-Sequenz-Code-Darstellung wird benötigt, um einzelne NML-Objekte zu markieren. Ein allgemeiner Timeout für den gesamten Dienst wird alternativ dargestellt. Die Payload nach dem Datentypindikator enthält die Anzahl von 15 Minuten seit dem 1.1.2000, als 24-Bit-Ganzzahl ohne Vorzeichen, wodurch mehr als 450 Jahre umfasst werden. Ein Datentypindikator vom Typ "02" zeigt einen relativen Timeout dar. Hier wird die relative Präsentation-Timeout-Dauer eines NML-Objekts definiert. Wenn diese Dauer verstrichen ist wird das NML-Objekt nicht länger angezeigt. Der Timeout beginnt mit jedem Empfang eines NML-Objekts, selbst wenn das Objekt bereits im Cache gespeichert ist. Dieser Escape-Sequenz-Code dient zum Markieren einzelner NML-Objekte. Die Payload-Daten enthalten die Anzahl von Minuten als 16-Bit-Ganzzahl ohne Vorzeichen (unsigned), wodurch mehr als 45 Tage erfasst werden. Die Timeout-Daten werden allgemein gesagt von der Timeoutsteuerung 100 von Fig. 7 verarbeitet.

Der Datentyp-Indikator "03" betrifft ein allgemeines Link-Ziel. Ein allgemeines Link-Ziel ist ein Ziel, das präsentiert oder z. B. durch die Verbindungssteuerung 101 aktiviert wird, wenn der Benutzer explizit die Ausführung einer Aktion verlangt, wenn also eine "Hot Button"-Funktionalität für eine Benutzerinteraktion dargestellt bzw. geschaffen wird. Allgemeine Link-Ziele können für alle Typen von NML-Objekten definiert werden. Die Verfügbarkeit eines allgemeinen Link-Targets für ein gegenwärtig dargestelltes NML-Objekt wird einem Benutzer auf irgendeine Weise mitgeteilt, wenn er einen Erweiterungs-Empfänger hat. Die Payload-Daten, die beispielsweise in Fig. 3c gezeigt sind, haben folgendes Format. 1 Byte stellt einen Verbindungs-Typ dar und n Bytes stellen eine Link-Adresse dar. Die folgenden Link-Typ-Werte sind beispielsweise verfügbar. Wenn der Link-Typ einen Wert von beispielsweise "00" hat, so sind die darauffolgenden 2-Bytes eine Objekt-ID eines anderen NML-Objekts in dem selben Datenservice.

Ein anderes Link-Typ-Byte von beispielsweise "01", dem ein URI-String folgt, zeigt auf andere DAB/DRM-Multiplexes, Dienste oder Dienstelemente.

Ein anderer Verbindungstyp, wie beispielsweise "02" die ein URL-String zeigt, zeigt auf eine Internetadresse oder ein Dokument.

Ein anderer Linktyp wie beispielsweise "03", dem eine Telefonnummer folgt, zeigt auf einen Sprachservice, der über Telefon erreicht werden kann. Die Nummer startet dabei beispielsweise mit einem internationalen Präfix, beispielsweise "+[internationale Ländervorwahl]".

Allgemein ist ein Erweiterungs-Empfänger ausgebildet, um unbekannte Link-Typ-Werte zu ignorieren.

Ein weiterer Datentypindikator "FF" wird beispielsweise als proprietärer Datentypindikator aufgefasst, der Daten voran geht, die nur bestimmte Erweiterungs-Empfänger betreffen, die diese proprietären Daten auswerten können.

Die Dateneinheiten können im Gegensatz zu den vorstehenden Objektmanagement-Typen auch Inhalts-Management-Typen umfassen. Ein Datentyp-Indikator von "20", der auch als Schlüsselwort bezeichnet wird, markiert ein folgendes Schlüsselwort zusammen mit einer optionalen Schlüsselwortbeschreibung. Das Schlüsselwort kann beispielsweise dazu verwendet werden, um einen Empfänger-basierten Suchindex zu erzeugen, wie es durch die Suchanfrageerzeugungseinrichtung 102 in Fig. 7 gezeigt ist. Der Nutzdaten-Abschnitt hat folgendes Format. Zunächst kommt ein Längencode mit der Schlüsselwortlänge, wobei der Wert gleich der Länge - 1 als vorzeichenlose Ganzzahl angegeben wird. Es wird die Anzahl der visuellen Textzeichen identifiziert, die diesem Datenabschnitt folgen, und die als Schlüsselwort behandelt werden sollen. Dann folgt eine Beschreibung mit n Bytes, wobei die optionale Beschreibung zusätzlich zu dem Schlüsselwort indexiert sein kann und/oder dem Benutzer dargestellt werden kann.

Ein anderer Datentypindikator von beispielsweise "21" stellt eine Makrodefinition dar. Ein Makro erlaubt die Definition von Textabschnitten einschließlich optionaler Escape-Sequenzen, die mehrere Male irgendwo in dem Inhaltsabschnitt mit einer einfachen Referenz eingesetzt werden können. Beispielsweise kann das Makro Sprachbeschreibungen definieren, die zusätzlich zu textlichen Textelementen dargestellt werden sollen. Der Datenabschnitt hat ein Format, bei dem zunächst eine Makro-ID (0 bis 255) von einem Byte, welche die folgende Makrodefinition identifiziert. Dann kommt eine Makro-Definition mit n-Bytes. Der Text (einschließlich Escapesequenzen), der eingefügt werden soll, immer wenn dieses Makro durch seine ID referenziert werden wird, ist in der Makrodefinition mit n-Bytes enthalten. Es sei darauf hingewiesen, dass die Makros nicht unbedingt für essentielle Informationen verwendet werden sollten, da sie von Empfängern auch ignoriert werden können. Ein anderer Datentypindikator "22" beispielsweise steht für eine Makroreferenz. Die Makrodefinition, die durch seine ID referenziert wird, wird an der Position dieser Escape-Sequenz für eine Darstellung dem Benutzer gegenüber virtuell eingeführt. Der Datenabschnitt enthält eine 1-Byte-Makro-ID (0 bis 255), die eine Makrodefinition referenziert. Makros werden allgemein durch den Makroprozessor 103 in Fig. 7 verarbeitet.

Eine andere Gruppe von Datentypen kann Sprachunterstützungstypen umfassen. Ein Datentyp-Indikator von beispielsweise "A0" definiert eine Standard-Sprache bzw. eine voreingestellte Sprache. Hier wird die voreingestellte Sprache des NML-Objekts beschrieben bzw. referenziert. Der Datenabschnitt, also die Payload von Fig. 3c trägt einen 3-Buchstaben ISO-Sprachcode aus Kleinbuchstaben.

Ein anderer Sprachunterstützungstyp, der beispielsweise mit "A1" referenziert wird, ist der Sprachabschnitt. Er definiert die Sprache einer spezifizierten Nummer eines Textabschnitts bzw. eines speziellen Teils eines NML-Objekts. Der Payload-Abschnitt hat folgendes Format. Es kommt eine Textlänge mit einem Byte, dessen Wert gleich dem Wert der Anzahl von Dateneinheiten dieser Textlänge - 1 ist als vorzeichenlose Ganzzahl. Dadurch wird die Anzahl von visuellen Textzeichen identifiziert, die diesem Datenabschnitt folgen, für den die Sprachdefinition gilt. Dann folgt eine Gruppe von 3 Bytes mit einer Sprachdefinition, welche einen 3-Buchstaben ISO-Sprachcode aus Kleinbuchstaben trägt.

Ein anderer Sprachunterstützungstyp wird durch den Datentyp-Indikator "A2" beispielsweise indiziert. Er betrifft Sprachphoneme und definiert eine Phonembeschreibung eines Textabschnitts unter Verwendung des internationalen phonetischen Alphabets (IPA). Der Payload-Abschnitt hat ein Format, bei dem zunächst eine Textlänge mit einem Byte kommt, dessen Wert eine Ganzzahl ist. Dieses Byte identifiziert die Anzahl von visuellen Textzeichen, die diesem Datenabschnitt folgen, welche durch eine phonetische Definition repräsentiert werden sollen. Dann folgt eine Gruppe von n-Bytes mit IPA-Phonemen. Diese Gruppe enthält die Phonemdefinitionen der Phoneme als IPA-Notationen.

Ein anderer Sprachunterstützungstyp, der mit dem DatentypIndikator "A3" beispielsweise referenziert ist, umfasst eine Sprachpause, wodurch eine Pause für Text-zu-Sprache-Prozessoren definiert wird, die an der Position der Escape-Sequenz eingefügt werden soll. Der Datenabschnitt trägt 1 Byte als vorzeichenlose Ganzzahl, wobei dieses Byte eine Sprachdauer in Einheiten von 0,1 Sekunden definiert.

Ein anderer Sprachunterstützungstyp, der beispielsweise den Datentypindikator "A4" haben kann, definiert Zeichen und insbesondere eine Anzahl von visuellen Textzeichen, die der Escape-Sequenz folgen, die von einem Text-zu-Sprache Prozessor als individuelle Zeichen oder Ziffern anstatt durchgehender Worte oder Zahlen behandelt werden sollen. Der Payload-Abschnitt trägt 1 Byte, das die Anzahl von visuellen Textzeichen definiert als vorzeichenlose Ganzzahl mit einem entsprechenden Wert.

Es sei darauf hingewiesen, dass alle diese Datentypen je nach maximaler Zahl, die durch den Längencode dargestellt werden kann, entweder in den der ersten Anzahl von Dateneinheiten 32 von Fig. 3a dargestellt werden können oder aber dann wenn die Anzahl von Dateneinheiten nicht reicht um sämtliche Daten zu schreiben, in der zweiten Anzahl von Dateneinheiten enthalten sind, die jeweils mit einer Escape-Fortsetzungs-Sequenz eingeleitet werden. Es müssen also nicht unbedingt alle Datentypen, die durch einen Datentypindikator referenziert werden, sowohl Dateneinheiten nach einer Escape-Start-Sequenz und einer Escape-Fortsetzungs-Sequenz haben. Stattdessen können auch kurze Datentypen lediglich Daten enthalten, die keine Fortsetzung benötigen, weil die Anzahl der Dateneinheiten dieser Daten kleiner ist als die maximal durch den Längencode 31b darstellbare Anzahl von Dateneinheiten ist.

Abhängig von den Gegebenheiten kann jedes erfindungsgemäße Verfahren in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das Verfahren ausgeführt wird. Allgemein besteht die Erfindung somit auch in einem Computer-Programm-Produkt mit einem auf einem maschinenlesbaren Träger gespeicherten Programmcode zur Durchführung eines erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

Gemäß einem Ausführungsbeispiel der Vorrichtung zum Erzeugen, ist der Datenstrom ein serieller Datenstrom und die Einrichtung 10 zum Eintragen ausgebildet, um die Escape-Start-Sequenz 31 im Datenstrom nach oder vor den Textdaten 30 einzutragen und um die Escape-Fortsetzungs-Sequenz 33 nach der ersten Anzahl 32 von Dateneinheiten in den Datenstrom einzutragen.

Bei einem bevorzugten Ausführungsbeispiel der Vorrichtung zum Erzeugen ist die Einrichtung 10 zum Eintragen ausgebildet, um zunächst die Textdaten 30, dann die Escape-StartSequenz 31, dann die erste Anzahl von Dateneinheiten, dann die Escape-Fortsetzungs-Sequenz 33 und dann die zweite Anzahl 34 von Dateneinheiten in den Datenstrom zu platzieren.

Bei einem bevorzugten Ausführungsbeispiel der Vorrichtung zum Erzeugen wird der Längen-Code 31b unmittelbar nach dem Escape-Start-Code 31a in den Datenstrom eingetragen oder der Längen-Code 33b wird unmittelbar nach dem Fortsetzungscode 33a in den Datenstrom eingetragen.

Bei einem bevorzugten Ausführungsbeispiel der Vorrichtung zum Erzeugen stammen der Längen-Code 33b, der nach dem Fortsetzungs-Code 33a in den Datenstrom eingetragen wird, und der Längen-Code 31b der nach dem Escape-Start-Code 31a in den Datenstrom eingetragen wird, aus derselben Codiertabelle für eine Längencodierung.

Bei einem bevorzugten Ausführungsbeispiel der Vorrichtung zum Erzeugen sind die Dateneinheiten in dem Datenstrom gleich und weisen jeweils eine vordefinierte Mehrzahl von Bits auf.

Bei einem bevorzugten Ausführungsbeispiel der Vorrichtung zum Erzeugen ist die vordefinierte Mehrzahl von Bits gleich 8, so dass eine Dateneinheit 1 Byte ist.

Bei einem bevorzugten Ausführungsbeispiel der Vorrichtung zum Erzeugen soll der Datenstrom von einer ersten Art von Basis-Empfängern und von einer zweiten Art von Erweiterungs-Empfängern lesbar sein, wobei die Einrichtung 10 zum Eintragen ausgebildet ist, um Textdaten-Codes zu verwenden, die von dem Basis-Empfängern und von den Erweiterungsempfängern erkennbar sind.

Bei einem bevorzugten Ausführungsbeispiel der Vorrichtung zum Erzeugen hat der Escape-Start-Code 31a die gleiche Länge wie ein Fortsetzungscode 33a innerhalb einer Escape-Fortsetzungs-Sequenz 33, wobei diese Länge gleich der Länge einer Dateneinheit ist.

Bei einem bevorzugten Ausführungsbeispiel der Vorrichtung zum Erzeugen ist der Längencode ausgebildet, um eine Inhaltslänge von 1 bis 256 Bytes zu codieren.

Bei einem bevorzugten Ausführungsbeispiel der Vorrichtung zum Erzeugen ist der Datentyp-Indikator 90 so, dass er von einem Basis-Decodierer nicht interpretierbar sein muss, aber von einem Erweiterungs-Decodierer interpretierbar ist.

Bei einem bevorzugten Ausführungsbeispiel der Vorrichtung zum Erzeugen ist die Einrichtung 10 zum Eintragen ausgebildet, um im Anschluss an den Datentypindikator Daten einzutragen, die den Datentyp haben, der durch den DatentypIndikator 90 angezeigt wird.

Bei einem bevorzugten Ausführungsbeispiel der Vorrichtung zum Erzeugen ist die Einrichtung 10 zum Eintragen ausgebildet, um den Datentyp-Indikator 90 in der ersten Anzahl von Dateneinheiten 32 unmittelbar nach einem Längencode 31b der Escape-Start-Sequenz 31 in den Datenstrom einzutragen.

Bei einem bevorzugten Ausführungsbeispiel der Vorrichtung zum Lesen wird der Datenstrom in einem Puffer zwischengespeichert und der Prozessor 71 ist ausgebildet, um die erste Anzahl von Dateneinheiten 32 und die zweite Anzahl von Dateneinheiten 34 aus dem Puffer zu löschen und den Puffer dann kontinuierlich auszulesen, oder den Puffer so anzusteuern, dass ein Bereich des Puffers, in dem die erste Anzahl von Dateneinheiten 32 und die zweite Anzahl von Dateneinheiten 34 gespeichert sind, beim Auslesen des Puffers übersprungen werden.

Bei einem bevorzugten Ausführungsbeispiel der Vorrichtung zum Lesen weist die erste Anzahl 32 von Dateneinheiten einen Datentyp-Indikator 90 auf, um einen Datentyp anzuzeigen, den die erste Anzahl von Dateneinheiten 32 und die zweite Anzahl von Dateneinheiten 34 haben, und der Prozessor 71 ist ausgebildet, um den Datentyp-Indikator 90 auszulesen und die erste Anzahl von Dateneinheiten 32 und die zweite Anzahl von Dateneinheiten 34 gemäß dem DatentypIndikator 90 gemeinsam zu verarbeiten.

Bei einem bevorzugten Ausführungsbeispiel der Vorrichtung zum Lesen ist das Ziel ein Objekt mit Textdaten in dem Datenstrom, ein DAB/DRM-Multiplex, ein Dienst oder Dienstelement, eine Internet-Adresse, ein Dokument im Internet, oder eine Telefonnummer.

Bei einem bevorzugten Ausführungsbeispiel der Vorrichtung zum Lesen ist der Prozessor 71 ausgebildet, um die ersten Dateneinheiten 32 oder die zweiten Dateneinheiten 34 zu ignorieren, wenn sie ein nicht-interpretierbares Ziel definieren.

Bei einem bevorzugten Ausführungsbeispiel der Vorrichtung zum Lesen weisen die erste Anzahl von Dateneinheiten 32, die zweite Anzahl von Dateneinheiten 34 oder weitere Dateneinheiten einen Datentyp-Indikator 90 auf, der Sprachunterstützungsdaten für einen Sprachprozessor 73 aufweist, die eine Sprache eines Textabschnitts angeben, Sprachphoneme umfassen, eine Sprachpause betreffen oder Sprachzeichen aufweisen, und der Prozessor 71 ist ausgebildet, um Sprachunterstützungsdaten auszugeben und dem Sprachprozessor zuzuführen, um eine Sprachausgabe zu erzeugen oder zu beeinflussen.

Bei einem bevorzugten Ausführungsbeispiel ist der Datenstrom auf einem Computer-lesbaren Medium gespeichert.

## Patentansprüche

1. Vorrichtung zum Erzeugen eines Datenstroms, mit folgenden Merkmalen:
einer Einrichtung (10) zum Eintragen von Textdaten (30) in einen Datenstrom, zum Eintragen einer Escape-Start-Sequenz (31) in den Datenstrom, wobei die Escape-Start-Sequenz eine erste Anzahl von Dateneinheiten definiert, die von einem Basis-Decodierer zu überspringen sind und von einem Erweiterungs-Decodierer zu interpretieren sind, zum Eintragen der ersten Anzahl (32) von Dateneinheiten in den Datenstrom, zum Eintragen einer Escape-Fortsetzungs-Sequenz (33) in den Datenstrom, wobei die Escape-Fortsetzungs-Sequenz eine zweite Anzahl von Dateneinheiten definiert, die von einem Basis-Decodierer zu überspringen sind und von einem Erweiterungs-Decodierer zusammen mit der ersten Anzahl von Dateneinheiten zu interpretieren sind, und zum Eintragen der zweiten Anzahl (34) von Dateneinheiten in den Datenstrom,
wobei die Escape-Start-Sequenz ein Code zum Codieren einer begrenzten Menge von Dateneinheiten ist, und wobei beliebig lange Dateneinschübe durch eine beliebig häufige Wiederholung von Escape-Fortsetzungs-Sequenzen und Einbringung von zugeordneten zweiten Dateneinheiten möglich sind, und
wobei die Escape-Start-Sequenz (31) einen Escape-Start-Code (31a) und einen ersten Längencode (31b) aufweist, und die Escape-Fortsetzungs-Sequenz (33) einen Fortsetzungs-Code (33a) und einen zweiten Längencode (33b) aufweist, wobei der Escape-Start-Code (31a) von dem Fortsetzungs-Code (33a) unterschiedlich ist, oder wobei der Escape-Start-Code (31a) und der Fortsetzungs-Code (33a) gleich sind und der erste Längencode (31b) mit maximaler Länge signalisiert, dass der im Datenstrom folgende Code ein Fortsetzungscode (33a) ist.

2. Vorrichtung nach dem vorhergehenden Anspruch, wobei der Escape-Start-Code (31a) oder der Fortsetzungscode (33a) von Textcodes unterschiedlich ist.

3. Vorrichtung nach einem der vorhergehenden Ansprüche, bei der die Einrichtung (10) so ausgebildet ist, um in einer vorbestimmten Beziehung zur Escape-Start-Sequenz (31) einen Datentyp-Indikator (90) in den Datenstrom einzutragen, der einen Datentyp sowohl der ersten Anzahl von Dateneinheiten als auch der zweiten Anzahl von Dateneinheiten (34) angibt.

4. Vorrichtung zum Lesen eines Datenstroms mit Textdaten (30), einer Escape-Start-Sequenz (31), die eine erste Anzahl von Dateneinheiten (32) definiert, der ersten Anzahl von Dateneinheiten (32), einer Escape-Fortsetzungs-Sequenz (33), die eine zweite Anzahl von Dateneinheiten definiert, und der zweiten Anzahl von Dateneinheiten (34), mit folgenden Merkmalen:
einer Einrichtung (72) zum Wiedergeben von Textdaten (30); und
einem Prozessor (71) zum Interpretieren der Escape-Start-Sequenz (31) so, dass aus der Escape-Start-Sequenz die erste Anzahl von Dateneinheiten bestimmt wird, um die erste Anzahl von Dateneinheiten zu überspringen, und zum Interpretieren der Escape-Fortsetzungs-Sequenz (33) so, dass aus der Escape-Fortsetzungs-Sequenz die zweite Anzahl von Dateneinheiten (34) bestimmt wird, um die zweite Anzahl von Dateneinheiten (34) zu überspringen,
wobei die Escape-Start-Sequenz (31) einen Escape-Start-Code (31a) und einen ersten Längencode (31b) aufweist, und die Escape-Fortsetzungs-Sequenz (33) einen Fortsetzungs-Code (33a) und einen zweiten Längencode (33b) aufweist, wobei der Escape-Start-Code (31a) von dem Fortsetzungs-Code (33a) unterschiedlich ist, oder wobei der Escape-Start-Code (31a) und der Fortsetzungs-Code (33a) gleich sind und der erste Längencode (31b) mit maximaler Länge signalisiert, dass der im Datenstrom folgende Code ein Fortsetzungscode (33a) ist.

5. Vorrichtung zum Lesen eines Datenstroms mit Textdaten (30), einer Escape-Start-Sequenz (31), die eine erste Anzahl von Dateneinheiten (32) definiert, der ersten Anzahl von Dateneinheiten (32), einer Escape-Fortsetzungs-Sequenz (33), die eine zweite Anzahl von Dateneinheiten definiert, und der zweiten Anzahl von Dateneinheiten (34), mit folgenden Merkmalen:
einer Einrichtung (72) zum Wiedergeben der Textdaten (30);
einem Prozessor (71) zum Interpretieren der Escape-Start-Sequenz (31) so, dass die erste Anzahl von Dateneinheiten (32) eingelesen wird, zum Interpretieren der Escape-Fortsetzungs-Sequenz (33) so, dass die zweite Anzahl von Dateneinheiten (34) eingelesen wird, und zum gemeinsamen Verarbeiten (73) der ersten Anzahl von Dateneinheiten (32) und der zweiten Anzahl von Dateneinheiten (34) zusätzlich oder statt einer Anzeige der Textdaten (30),
wobei die Escape-Start-Sequenz (31) einen Escape-Start-Code (31a) und einen ersten Längencode (31b) aufweist, und die Escape-Fortsetzungs-Sequenz (33) einen Fortsetzungs-Code (33a) und einen zweiten Längencode (33b) aufweist, wobei der Escape-Start-Code (31a) von dem Fortsetzungs-Code (33a) unterschiedlich ist, oder wobei der Escape-Start-Code (31a) und der Fortsetzungs-Code (33a) gleich sind und der erste Längencode (31b) mit maximaler Länge signalisiert, dass der im Datenstrom folgende Code ein Fortsetzungscode (33a) ist.

6. Vorrichtung nach Anspruch 5, bei der die erste Anzahl von Dateneinheiten (32) und die zweite Anzahl von Dateneinheiten (34) ein Verbindungsziel definieren, und bei der der Prozessor (71) ausgebildet ist, um eine Datenverbindung zu dem Ziel auszuführen.

7. Vorrichtung nach einem der Ansprüche 5 und 6, bei der die erste Anzahl von Dateneinheiten (32) oder die zweite Anzahl von Dateneinheiten (34) oder eine weitere Anzahl von Dateneinheiten eine absolute oder relative Timeout-Dauer für ein Objekt definieren, und
bei der der Prozessor (71) ausgebildet ist, um eine Timeout-Steuerung (100), die ein Vergleichen der Timeout-Zeit und einer Prozessor-Zeit aufweist, durchzuführen, um die Textdaten und erweiterte Multimedia-Inhalte nur dann anzuzeigen, wenn die Timeout-Zeit noch nicht von der Prozessorzeit erreicht ist.

8. Vorrichtung nach einem der Ansprüche 5 bis 7, bei der die erste Anzahl von Dateneinheiten (32) und die zweite Anzahl von Dateneinheiten (34) oder weitere Dateneinheiten Textzeichen definieren, die als Schlüsselwort zu interpretieren sind, und bei der der Prozessor (71) eine Such-Anfrageerzeugungseinrichtung (102) aufweist, um auf der Basis des Schlüsselworts eine Datenbankabfrage in der Vorrichtung zum Decodieren durchzuführen.

9. Vorrichtung nach einem der Ansprüche 5 bis 8, bei der die erste Anzahl von Dateneinheiten (32) oder die zweite Anzahl von Dateneinheiten (34) oder weitere Dateneinheiten Makrodaten aufweisen, und bei der der Prozessor (71) ausgebildet ist, um eine Makroprozessor-Funktionalität (103) durchzuführen, um ein durch die Makrodaten definiertes Makro auszuführen.

10. Vorrichtung nach einem der Ansprüche 5 bis 9, bei dem die erste Anzahl von Dateneinheiten (32), die zweite Anzahl von Dateneinheiten (34) oder eine weitere Anzahl von Dateneinheiten einen Datentyp-Indikator (90) aufweist, der eine Sprachbeschreibung darstellt, wobei der Prozessor (71) einen Sprachprozessor (73, 104) aufweist, der durch die Dateneinheiten ansteuerbar ist, um eine Sprachausgabe zu beeinflussen.
bei der der Prozessor (71) ausgebildet ist, um Sprachunterstützungsdaten auszugeben und dem Sprachprozessor zuzuführen, um eine Sprachausgabe zu erzeugen oder zu beeinflussen.

11. Verfahren zum Erzeugen eines Datenstroms, mit:
Eintragen von Textdaten (30) in einen Datenstrom;
Eintragen einer Escape-Start-Sequenz (31) in den Datenstrom, wobei die Escape-Start-Sequenz eine erste Anzahl von Dateneinheiten definiert, die von einem Basis-Decodierer zu überspringen sind und von einem Erweiterungs-Decodierer zu interpretieren sind,
Eintragen der ersten Anzahl (32) von Dateneinheiten in den Datenstrom,
Eintragen einer Escape-Fortsetzungs-Sequenz (33) in den Datenstrom, wobei die Escape-Fortsetzungs-Sequenz eine zweite Anzahl von Dateneinheiten definiert, die von einem Basis-Decodierer zu überspringen sind und von einem Erweiterungs-Decodierer zusammen mit der ersten Anzahl von Dateneinheiten zu interpretieren sind; und
Eintragen der zweiten Anzahl (34) von Dateneinheiten in den Datenstrom,
wobei die Escape-Start-Sequenz ein Code zum Codieren einer begrenzten Menge von Dateneinheiten ist, und wobei beliebig lange Dateneinschübe durch eine beliebig häufige Wiederholung von Escape-Fortsetzungs-Sequenzen und Einbringung von zugeordneten zweiten Dateneinheiten möglich sind,
wobei die Escape-Start-Sequenz (31) einen Escape-Start-Code (31a) und einen ersten Längencode (31b) aufweist, und die Escape-Fortsetzungs-Sequenz (33) einen Fortsetzungs-Code (33a) und einen zweiten Längencode (33b) aufweist, wobei der Escape-Start-Code (31a) von dem Fortsetzungs-Code (33a) unterschiedlich ist, oder wobei der Escape-Start-Code (31a) und der Fortsetzungs-Code (33a) gleich sind und der erste Längencode (31b) mit maximaler Länge signalisiert, dass der im Datenstrom folgende Code ein Fortsetzungscode (33a) ist.

12. Verfahren zum Lesen eines Datenstroms mit Textdaten (30), einer Escape-Start-Sequenz (31), die eine erste Anzahl von Dateneinheiten (32) definiert, der ersten Anzahl von Dateneinheiten (32), einer Escape-Fortsetzungs-Sequenz (33), die eine zweite Anzahl von Dateneinheiten definiert, und der zweiten Anzahl von Dateneinheiten (34), mit:
Darstellen (72) von Textdaten (30);
Interpretieren der Escape-Start-Sequenz (31) so, dass aus der Escape-Start-Sequenz die erste Anzahl von Dateneinheiten bestimmt wird;
Überspringen der ersten Anzahl von Dateneinheiten basierend auf dem Schritt des Interpretierens der Escape-Start-Sequenz;
Interpretieren der Escape-Fortsetzungs-Sequenz (33) so, dass aus der Escape-Fortsetzungs-Sequenz die zweite Anzahl von Dateneinheiten (34) bestimmt wird,
Überspringen der zweiten Anzahl von Dateneinheiten (34) basierend auf dem Schritt des Interpretierens der Escape-Fortsetzungs-Sequenz,
wobei die Escape-Start-Sequenz (31) einen Escape-Start-Code (31a) und einen ersten Längencode (31b) aufweist, und die Escape-Fortsetzungs-Sequenz (33) einen Fortsetzungs-Code (33a) und einen zweiten Längencode (33b) aufweist, wobei der Escape-Start-Code (31a) von dem Fortsetzungs-Code (33a) unterschiedlich ist, oder wobei der Escape-Start-Code (31a) und der Fortsetzungs-Code (33a) gleich sind und der erste Längencode (31b) mit maximaler Länge signalisiert, dass der im Datenstrom folgende Code ein Fortsetzungscode (33a) ist.

13. Verfahren zum Lesen eines Datenstroms mit Textdaten (30), einer Escape-Start-Sequenz (31), die eine erste Anzahl von Dateneinheiten (32) definiert, der ersten Anzahl von Dateneinheiten (32), einer Escape-Fortsetzungs-Sequenz (33), die eine zweite Anzahl von Dateneinheiten definiert, und der zweiten Anzahl von Dateneinheiten (34), mit:
Interpretieren der Escape-Start-Sequenz (31) so, dass die erste Anzahl von Dateneinheiten (32) bestimmt wird,
Einlesen der ersten Anzahl von Dateneinheiten basierend auf dem Schritt des Interpretierens der Escape-Start-Sequenz;
Interpretieren der Escape-Fortsetzungs-Sequenz (33) so, dass die zweite Anzahl von Dateneinheiten (34) bestimmt wird;
Einlesen der zweiten Anzahl von Dateneinheiten basierend auf dem Schritt des Interpretierens der Escape-Fortsetzungs-Sequenz; und
gemeinsames Verarbeiten (73) der ersten Anzahl von Dateneinheiten (32) und der zweiten Anzahl von Dateneinheiten (34) zusätzlich oder statt einer Anzeige der Textdaten (30),
wobei die Escape-Start-Sequenz (31) einen Escape-Start-Code (31a) und einen ersten Längencode (31b) aufweist, und die Escape-Fortsetzungs-Sequenz (33) einen Fortsetzungs-Code (33a) und einen zweiten Längencode (33b) aufweist, wobei der Escape-Start-Code (31a) von dem Fortsetzungs-Code (33a) unterschiedlich ist, oder wobei der Escape-Start-Code (31a) und der Fortsetzungs-Code (33a) gleich sind und der erste Längencode (31b) mit maximaler Länge signalisiert, dass der im Datenstrom folgende Code ein Fortsetzungscode (33a) ist.

14. Computer-Programm mit einem Programmcode zum Durchführen des Verfahrens nach Patentanspruch 11, 12 oder 13, wenn das Computer-Programm auf einem Rechner abläuft.

15. Datenstrom mit Textdaten (30), einer Escape-Start-Sequenz (31), die eine erste Anzahl von Dateneinheiten (32) definiert, der ersten Anzahl von Dateneinheiten (32), einer Escape-Fortsetzungs-Sequenz (33), die eine zweite Anzahl von Dateneinheiten definiert, und der zweiten Anzahl von Dateneinheiten (34), wobei die zweite Anzahl von Dateneinheiten (34) von einem Erweiterungs-Decodierer zusammen mit der ersten Anzahl von Dateneinheiten (32) interpretierbar sind, wobei die Escape-Start-Sequenz (31) einen Escape-Start-Code (31a) und einen ersten Längencode (31b) aufweist, und die Escape-Fortsetzungs-Sequenz (33) einen Fortsetzungs-Code (33a) und einen zweiten Längencode (33b) aufweist, wobei der Escape-Start-Code (31a) von dem Fortsetzungs-Code (33a) unterschiedlich ist, oder wobei der Escape-Start-Code (31a) und der FortsetzungsCode (33a) gleich sind und der erste Längencode (31b) mit maximaler Länge signalisiert, dass der im Datenstrom folgende Code ein Fortsetzungscode (33a) ist.

## Claims

1. Apparatus for generating a data stream, comprising:
a means (10) for entering text data (30) into a data stream, for entering an escape-start-sequence (31) into the data stream, wherein the escape-start-sequence defines a first number of data units to be skipped by a base decoder and to be interpreted by an extension decoder, for entering the first number (32) of data units into the data stream, for entering an escape-continuation-sequence (33) into the data stream, wherein the escape-continuation-sequence defines a second number of data units to be skipped by a base decoder and to be interpreted by an extension decoder together with the first number of data units, and for entering the second number (34) of data units into the data stream,
wherein the escape-start-sequence is a code for encoding a limited amount of data units and wherein data inserts of any length are possible by any number of repetitions of escape-continuation-sequences and entering associated second data units and
wherein the escape-start-sequence (31) comprises an escape-start-code (31 a) and a first length code (31b), and the escape-continuation-sequence (33) comprises a continuation code (33a) and a second length code (33b), wherein the escape-start-code (31a) differs from the continuation code (33a), or wherein the escape-start-code (31a) and the continuation code (33a) are equal and the first length code (31b) with a maximum length signalizes that the code following in the data stream is a continuation code (33a).

2. Apparatus according to the preceding claim, wherein the escape-start-code (31a) or the continuation code (33a) differ from text codes.

3. Apparatus according to one of the preceding claims, wherein the means (10) is configured to enter, in a certain relation to the escape-start-sequence (31), a data type indicator (90) into the data stream which indicates a data type both of the first number of data units and also of the second number of data units (34).

4. Apparatus for reading a data stream having text data (30), an escape-start-sequence (31) defining a first number of data units (32), the first number of data units (32), an escape-continuation-sequence (33) defining a second number of data units, and the second number of data units (34), comprising:
a means (72) for displaying text data (30); and
a processor (71) for interpreting the escape-start-sequence (31) so that from the escape-start-sequence the first number of data units is determined, for skipping the first number of data units and for interpreting the escape-continuation-sequence (33) to determine the second number of data units (34) from the escape-continuation-sequence, to skip the second number of data units (34),
wherein the escape-start-sequence (31) comprises an escape-start-code (31a) and a first length code (31b) and the escape-continuation-sequence (33) comprises a continuation code (33a) and a second length code (33b), wherein the escape-start-code (31a) differs from the continuation code (33a) or wherein the escape-start-code (31a) and the continuation code (33a) are equal and the first length code (31b) of maximum length signalizes that the code following in the data stream is a continuation code (33a).

5. Apparatus for reading a data stream having text data (30), an escape-start-sequence (31) defining a first number of data units (32), the first number of data units (32), an escape-continuation-sequence (33) defining a second number of data units, and the second number of data units (34), comprising:
a means (72) for displaying the text data (30);
a processor (71) for interpreting the escape-start-sequence (31), so that the first number of data units (32) is read in, for interpreting the escape-continuation-sequence (33) so that the second number of data units (34) is read in and for jointly processing (73) the first number of data units (32) and the second number of data units (34) in addition to or instead of displaying the text data (30),
wherein the escape-start-sequence (31) comprises an escape-start-code (31a) and a first length code (31b) and the escape-continuation-sequence (33) comprises a continuation code (33a) and a second length code (33b), wherein the escape-start-code (31a) differs from the continuation code (33a), or wherein the escape-start-code (31a) and the continuation code (33a) are equal and the first length code (31b) with a maximum length signalizes that the code following in the data stream is a continuation code (33a).

6. Apparatus according to claim 5, wherein the first number of data units (32) and the second number of data units (34) define a connection target, and
wherein the processor (71) is implemented to execute a data connection to the target.

7. Apparatus according to one of claims 5 and 6, wherein the first number of data units (32) or the second number of data units (34) or a further number of data units define an absolute or relative time-out period for an object, and
wherein the processor (71) is implemented to execute a timeout control (100) having a comparison of the timeout time and a processor time for displaying the text data and extended multimedia content only when the timeout time has not been reached by the processor time.

8. Apparatus according to one of claims 5 to 7, wherein the first number of data units (32) and the second number of data units (34) or further data units define text characters that are to be interpreted as key words, and wherein the processor (71) comprises a search-query generation means (102) for performing a data base query in the apparatus for decoding based on the key word.

9. Apparatus according to one of claims 5 to 8, wherein the first number of data units (32) or the second number of data units (34) or further data units have macro data and the processor (71) is implemented to perform a macro processor functionality (103) to execute a macro defined by the macro data.

10. Apparatus according to one of claims 5 to 9, wherein the first number of data units (32), the second number of data units (34) or a further number of data units have a data type indicator (90), representing a speech description, wherein the processor (71) comprises a speech processor (73, 104) that can be controlled by the data units for influencing a speech output,
wherein the processor (71) is implemented to output speech support data and supply same to the speech processor to generate a speech output or influence the same.

11. Method for generating a data stream, comprising:
entering text data (30) into a data stream;
entering an escape-start-sequence (31) into the data stream, the escape-start-sequence defining a first number of data units that are to be skipped by a base decoder and to be interpreted by an extension decoder,
entering the first number (32) of data units into the data stream,
entering an escape-continuation-sequence (33) into the data stream, the escape-continuation-sequence defining a second number of data units that are to be skipped by a base decoder and to be interpreted by an extension decoder together with the first number of data units; and
entering the second number (34) of data units into the data stream,
wherein the escape-start-sequence is a code for encoding a limited amount of data units and wherein data inserts of any length are possible by any number of repetitions of escape-continuation-sequences and entering associated second data units and
wherein the escape-start-sequence (31) comprises an escape-start-code (31a) and a first length code (31b), and the escape-continuation-sequence (33) comprises a continuation code (33a) and a second length code (33b), wherein the escape-start-code (31a) differs from the continuation code (33a), or wherein the escape-start-code (31a) and the continuation code (33a) are equal and the first length code (31b) with a maximum length signalizes that the code following in the data stream is a continuation code (33a).

12. Method for reading a data stream having text data (30), an escape-start-sequence (31) defining a first number of data units (32), the first number of data units (32), an escape-continuation-sequence (33) defining a second number of data units, and the second number of data units (34), comprising:
displaying (72) text data (30);
interpreting the escape-start-sequence (31) such that the first number of data units is determined from the escape-start-sequence;
skipping the first number of data units based on the step of interpreting the escape-start-sequence;
interpreting the escape-continuation-sequence (33) such that the second number of data units (34) is determined from the escape-continuation-sequence,
skipping the second number of data units (34) based on the step of interpreting the escape-continuation-sequence;
wherein the escape-start-sequence (31) comprises an escape-start-code (31 a) and a first length code (31b) and the escape-continuation-sequence (33) comprises a continuation code (33a) and a second length code (33b), wherein the escape-start-code (31a) differs from the continuation code (33a) or wherein the escape-start-code (31a) and the continuation code (33a) are equal and the first length code (31b) of maximum length signalizes that the code following in the data stream is a continuation code (33a).

13. Method for reading a data stream having text data (30), an escape-start-sequence (31) defining a first number of data units (32), the first number of data units (32), an escape-continuation-sequence (33) defining a second number of data units, and the second number of data units (34), comprising:
interpreting the escape-start-sequence (31) such that the first number of data units (32) is determined,
reading in the first number of data units based on the step of interpreting the escape-start-sequence;
interpreting the escape-continuation-sequence (33) such that the second number of data units (34) is determined;
reading in the second number of data units based on the step of interpreting the escape-continuation-sequence; and
jointly processing (73) the first number of data units (32) and the second number of data units (34) in addition to or instead of displaying the text data (30),
wherein the escape-start-sequence (31) comprises an escape-start-code (31 a) and a first length code (31b) and the escape-continuation-sequence (33) comprises a continuation code (33a) and a second length code (33b), wherein the escape-start-code (3 1 a) differs from the continuation code (33a) or wherein the escape-start-code (31a) and the continuation code (33a) are equal and the first length code (31b) of maximum length signalizes that the code following in the data stream is a continuation code (33a).

14. A computer program having a program code for executing the method according to claim 11, 12 or 13, when the computer program is executed on a computer.

15. Data stream having text data (30), an escape-start-sequence (31) that defines a first number of data units (32), the first number of data units (32), an escape-continuation-sequence (33) that defines a second number of data units, and the second number of data units (34), wherein the second number of data units may be interpreted by an extension decoder together with the first number of data units (32), wherein the escape-start-sequence (31) comprises an escape-start-code (31 a) and a first length code (31b), and wherein the escape-continuation-sequence (33) comprises a continuation code (33a) and a second length code (33b), wherein the escape-start-code (31a) differs from the continuation code (33a), or wherein the escape-start-code (31a) and the continuation code (33a) are equal and the first length code (31b) with a maximum length signalizes that the code following in the data stream is a continuation code (33a).

## Revendications

1. Dispositif pour générer un flux de données, aux caractéristiques suivantes:
un moyen (10) destiné à entrer des données de texte (30) dans un flux de données, à entrer une séquence de début d'échappement (31) dans le flux de données, la séquence de début d'échappement définissant un premier nombre d'unités de données qui doivent être sautées par un décodeur de base et être interprétées par un décodeur d'extension, à entrer le premier nombre (32) d'unités de données dans le flux de données, à entrer une séquence de continuation d'échappement (33) dans le flux de données, la séquence de continuation d'échappement définissant un deuxième nombre d'unités de données qui doivent être sautées par un décodeur de base et être interprétées par un décodeur d'extension ensemble avec le premier nombre d'unités de données, et à entrer le deuxième nombre (34) d'unités de données dans le flux de données,
la séquence de début d'échappement étant un code pour coder une quantité limitée d'unités de données, et des insertions de données de longueur à volonté étant possibles par une répétition à une fréquence à volonté de séquences de continuation d'échappement et une introduction de deuxièmes unités de données associées, et
la séquence de début d'échappement (31) présentant un code de début d'échappement (31a) et un premier code de longueur (31b), et la séquence de continuation d'échappement (33) présentant un code de continuation (33a) et un deuxième code de longueur (33b), le code de début d'échappement (31a) étant différent du code de continuation (33a), ou le code de début d'échappement (31a) et le code de continuation (33a) étant identiques et le premier code de longueur (31 b) de longueur maximale signalant que le code suivant dans le flux de données est un code de continuation (33a).

2. Dispositif selon la revendication précédente, dans lequel le code de début d'échappement (31a) ou le code de continuation (33a) est différent des codes de texte.

3. Dispositif selon l'une des revendications précédentes, dans lequel le moyen (10) est réalisé pour entrer, selon un rapport prédéterminé avec la séquence de début d'échappement (31), dans le flux de données un indicateur de type de données (90) qui indique un type de données tant du premier nombre d'unités de données que du deuxième nombre d'unités de données (34).

4. Dispositif pour lire un flux de données avec des données de texte (30), une séquence de début d'échappement (31) définissant un premier nombre d'unités de données (32), le premier nombre d'unités de données (32), une séquence de continuation d'échappement (33) définissant un deuxième nombre d'unités de données, et le deuxième nombre d'unités de données (34), aux caractéristiques suivantes:
un moyen (72) destiné à reproduire des données de texte (30); et
un processeur (71) destiné à interpréter la séquence de début d'échappement (31) de sorte qu'à partir de la séquence de début d'échappement soit déterminé le premier nombre d'unités de données, pour sauter le premier nombre d'unités de données, et à interpréter la séquence de continuation d'échappement (33) de sorte qu'à partir de la séquence de continuation d'échappement soit déterminé le deuxième nombre d'unités de données (34), pour sauter le deuxième nombre d'unités de données (34),
la séquence de début d'échappement (31) présentant un code de début d'échappement (31a) et un premier code de longueur (31b), et la séquence de continuation d'échappement (33) présentant un code de continuation (33a) et un deuxième code de longueur (33b), le code de début d'échappement (31a) étant différent du code de continuation (33a), ou le code de début d'échappement (31a) et le code de continuation (33a) étant identiques et le premier code de longueur (31 b) de longueur maximale signalant que le code suivant dans le flux de données est un code de continuation (33a).

5. Dispositif pour lire un flux de données avec des données de texte (30), une séquence de début d'échappement (31) définissant un premier nombre d'unités de données (32), le premier nombre d'unités de données (32), une séquence de continuation d'échappement (33) définissant un deuxième nombre d'unités de données, et le deuxième nombre d'unités de données (34), aux caractéristiques suivantes:
un moyen (72) destiné à reproduire des données de texte (30); et
un processeur (71) destiné à interpréter la séquence de début d'échappement (31) de sorte que soit lu le premier nombre d'unités de données (32), à interpréter la séquence de continuation d'échappement (33) de sorte que soit lu le deuxième nombre d'unités de données (34), et à traiter en commun (73) le premier nombre d'unités de données (32) et le deuxième nombre d'unités de données (34) en plus ou au lieu d'une indication des données de texte (30),
la séquence de début d'échappement (31) présentant un code de début d'échappement (31a) et un premier code de longueur (31b), et la séquence de continuation d'échappement (33) présentant un code de continuation (33a) et un deuxième code de longueur (33b), le code de début d'échappement (31a) étant différent du code de continuation (33a), ou le code de début d'échappement (31a) et le code de continuation (33a) étant identiques et le premier code de longueur (31b) de longueur maximale signalant que le code suivant dans le flux de données est un code de continuation (33a).

6. Dispositif selon la revendication 5, dans lequel le premier nombre d'unités de données (32) et le deuxième nombre d'unités de données (34) définissent un objectif d'assemblage, et
dans lequel le processeur (71) est réalisé pour effectuer un assemblage de données selon l'objectif.

7. Dispositif selon l'une des revendications 5 et 6, dans lequel le premier nombre d'unités de données (32) ou le deuxième nombre d'unités de données (34) ou un autre nombre d'unités de données définissent une durée de temps d'arrêt absolue ou relative pour un objet, et
dans lequel le processeur (71) est réalisé pour effectuer un réglage du temps d'arrêt (100) présentant une comparaison entre la durée de temps d'arrêt et un temps de processeur, pour n'indiquer les données de texte et les contenus multimédia étendus que lorsque la durée de temps d'arrêt n'est pas encore atteinte par le temps de processeur.

8. Dispositif selon l'une des revendications 5 à 7, dans lequel le premier nombre d'unités de données (32) et le deuxième nombre d'unités de données (34) ou d'autres unités de données définissent des caractères de texte qui doivent être interprétés comme mot-clé, et dans lequel le processeur (71) présente un moyen de génération de demande de recherche (102), pour effectuer, sur base du mot-clé, une interrogation de la banque de données dans le dispositif pour décoder.

9. Dispositif selon l'une des revendications 5 à 8, dans lequel le premier nombre d'unités de données (32) ou le deuxième nombre d'unités de données (34) ou les autres unités de données présentent des macro-données, et dans lequel le processeur (71) est réalisé pour effectuer une fonctionnalité de macro-processeur (103), pour réaliser une macro définie par les macro-données.

10. Dispositif selon l'une des revendications 5 à 9, dans lequel le premier nombre d'unités de données (32), le deuxième nombre d'unités de données (34) ou un autre nombre d'unités de données présente un indicateur de type de données (90) qui représente une description de parole, le processeur (71) présentant un processeur de parole (73, 104) qui peut être activé par les unités de données, pour influencer une sortie de parole,
dans lequel le processeur (71) est réalisé pour sortir des données de support de parole et les alimenter vers le processeur de parole, pour générer ou influencer une sortie de parole.

11. Procédé pour générer un flux de données, avec:
entrer des données de texte (30) dans un flux de données;
entrer une séquence de début d'échappement (31) dans le flux de données, la séquence de début d'échappement définissant un premier nombre d'unités de données qui doivent être sautées par un décodeur de base et être interprétées par un décodeur d'extension,
entrer le premier nombre (32) d'unités de données dans le flux de données,
entrer une séquence de continuation d'échappement (33) dans le flux de données, la séquence de continuation d'échappement définissant un deuxième nombre d'unités de données qui doivent être sautées par un décodeur de base et être interprétées par un décodeur d'extension ensemble avec le premier nombre d'unités de données; et
entrer le deuxième nombre (34) d'unités de données dans le flux de données,
la séquence de début d'échappement étant un code pour coder une quantité limitée d'unités de données, et des insertions de données de longueur à volonté étant possibles par une répétition d'une fréquence à volonté de séquences de continuation d'échappement et une introduction de deuxièmes unités de données associées,
la séquence de début d'échappement (31) présentant un code de début d'échappement (31a) et un premier code de longueur (31b), et la séquence de continuation d'échappement (33) présentant un code de continuation (33a) et un deuxième code de longueur (33b), le code de début d'échappement (31a) étant différent du code de continuation (33a), ou le code de début d'échappement (31a) et le code de continuation (33a) étant identiques et le premier code de longueur (31 b) de longueur maximale signalant que le code suivant dans le flux de données est un code de continuation (33a).

12. Procédé pour lire un flux de données avec des données de texte (30), une séquence de début d'échappement (31) définissant un premier nombre d'unités de données (32), le premier nombre d'unités de données (32), une séquence de continuation d'échappement (33) définissant un deuxième nombre d'unités de données, et le deuxième nombre d'unités de données (34), avec:
représenter (72) des données de texte (30);
interpréter la séquence de début d'échappement (31) de sorte qu'à partir de la séquence de début d'échappement soit déterminé le premier nombre d'unités de données;
sauter le premier nombre d'unités de données sur base de l'étape d'interprétation de la séquence de début d'échappement;
interpréter la séquence de continuation d'échappement (33) de sorte qu'à partir de la séquence de continuation d'échappement soit déterminé le deuxième nombre d'unités de données (34),
sauter le deuxième nombre d'unités de données (34) sur base de l'étape d'interprétation de la séquence de continuation d'échappement,
la séquence de début d'échappement (31) présentant un code de début d'échappement (31a) et un premier code de longueur (31b), et la séquence de continuation d'échappement (33) présentant un code de continuation (33a) et un deuxième code de longueur (33b), le code de début d'échappement (31a) étant différent du code de continuation (33a), ou le code de début d'échappement (31a) et le code de continuation (33a) étant identiques et le premier code de longueur (31b) de longueur maximale signalant que le code suivant dans le flux de données est un code de continuation (33a).

13. Procédé pour lire un flux de données avec des données de texte (30), une séquence de début d'échappement (31) définissant un premier nombre d'unités de données (32), le premier nombre d'unités de données (32), une séquence de continuation d'échappement (33) définissant un deuxième nombre d'unités de données, et le deuxième nombre d'unités de données (34), avec:
interpréter la séquence de début d'échappement (31) de sorte que soit lu le premier nombre d'unités de données (32),
lire le premier nombre d'unités de données sur base de l'étape d'interprétation de la séquence de début d'échappement;
interpréter la séquence de continuation d'échappement (33) de sorte que soit lu le deuxième nombre d'unités de données (34);
lire le deuxième nombre d'unités de données sur base de l'étape d'interprétation de la séquence de continuation d'échappement;
traiter en commun (73) le premier nombre d'unités de données (32) et le deuxième nombre d'unités de données (34) en plus ou au lieu d'une indication des données de texte (30),
la séquence de début d'échappement (31) présentant un code de début d'échappement (31a) et un premier code de longueur (31b), et la séquence de continuation d'échappement (33) présentant un code de continuation (33a) et un deuxième code de longueur (33b), le code de début d'échappement (31a) étant différent du code de continuation (33a), ou le code de début d'échappement (31a) et le code de continuation (33a) étant identiques et le premier code de longueur (31 b) de longueur maximale signalant que le code suivant dans le flux de données est un code de continuation (33a).

14. Programme d'ordinateur avec un code de programme pour réaliser le procédé selon la revendication 11, 12 ou 13 lorsque le programme d'ordinateur est exécuté sur un ordinateur.

15. Flux de données avec des données de texte (30), une séquence de début d'échappement (31) définissant un premier nombre d'unités de données (32), le premier nombre d'unités de données (32), une séquence de continuation d'échappement (33) définissant un deuxième nombre d'unités de données, et le deuxième nombre d'unités de données (34), le deuxième nombre d'unités de données (34) pouvant être interprété par un décodeur d'extension ensemble avec le premier nombre d'unités de données (32), la séquence de début d'échappement (31) présentant un code de début d'échappement (31a) et un premier code de longueur (31 b), et la séquence de continuation d'échappement (33) présentant un code de continuation (33a) et un deuxième code de longueur (33b), le code de début d'échappement (31a) étant différent du code de continuation (33a), ou le code de début d'échappement (31a) et le code de continuation (33a) étant identiques et le premier code de longueur (31 b) de longueur maximale signalant que le code suivant dans le flux de données est un code de continuation (33a).
